# EUROPEAN PATENT SPECIFICATION

(11) **EP 4 064 835 B1**
(45) Date of publication and mention of the grant of the patent: **30.10.2024**
(21) Application number: 20816405.3
(22) Date of filing: 24.11.2020
(51) Int. Cl.: A01K 73/045, B63B 21/66, G01V 1/38

(54) **A TRAWL DOOR**
SCHERBRETT
PORTE DE CHALUT

(30) Priority: 25.11.2019 DK PA201970721
(43) Date of publication of application: 05.10.2022
(73) Proprietor: Volu Ventis ApS, 8600 Silkeborg (DK); P/F Vónin, 530 Fuglafjørdur (FO)
(72) Inventor: HJORT, Søren, 8600 Silkeborg (DK)
(74) Representative: Zacco Denmark A/S
(86) International application number: PCT/DK2020/050326
(87) International publication number: WO 2021/104590

(56) References cited:
- WO-A1-2010/019049
- WO-A1-2013/014507
- WO-A1-2015/055207
- US-A- 5 283 972

## Description

### Technical Field

The present invention relates to a trawl door with an actuation system for positional control in the water, which minimizes the use of energy.

### Background art

Trawl doors for trawling have been used for more than half a century. The trawl doors are hydrodynamic wings which upon being towed by the towing vessel (trawler) will generate outwards directed forces, such that the starboard trawl door will be forced outwards in the starboard direction and the port trawl door will be forced outwards in the port direction. The trawl doors are connected to the towed trawl by bridles, and as the trawl doors are forced away from each other by the hydrodynamic spreading forces the trawl will gradually open laterally until the desired trawl opening spread is achieved.

Over the past decade developments towards controllable trawl doors have appeared, such that the skipper on the bridge has remote control of the trawl doors and can adjust their position laterally and/or vertically in the water during the trawling operation. The potential advantages being that the trawl spread can be kept constant at all times, and that the trawling depth can be quickly adjusted to catch the fish located on the ship's sonar equipment. Different control actuation concepts have been proposed. Common for most concepts is the implementation of at least two actuators on each trawl door: one on the upper half and one on the lower half of the vertically oriented trawl door, such that individual actuation of the actuators can enable the door to increase or decrease the spreading force on both upper and lower half, or decrease spreading force on lower half while increasing on upper half, such that the trawl door will rotate slightly (i.e. around the horizontal axis) and deflect the spreading force direction slightly downwards so the trawl door will go deeper in the water, and vice versa if the trawl door is to go higher in the water. Examples of existing or previously described control concepts are:
- Pivotable trailing edge flaps
- Pivotable leading edge flaps
- Horizontally slidable trailing edge flaps
- Horizontally slidable leading edge flaps
- Vertically slidable upper and lower foil end extensions

The pivotable flaps is the most used control concept and has its roots in the aviation industry where it has been used on aircrafts for more than a century. A disadvantage of the pivotable flaps is that the flap pivoting motion is directed perpendicular to the flap surface, and hence parallel to the water pressure forces acting on the flap. Water is a heavy medium and at typical towing velocities of 3-6 knots substantial pressure forces will impact a pivotable flap. Consequently, when the flap rotates in one of its two actuation directions, the mechanical work - and thus the discharge energy needed from the battery power supply - needed to overcome the water pressure forces is substantial. A disadvantage of the sliding surfaces is the friction, wear, and tear involved in the sliding motion, which is also why this concept is mostly of academic interest and has not yet been implemented on full scale trawl doors. A common disadvantage of both pivotable and slidable flaps and slidable foil extensions is the mechanical vulnerability. Flaps and foil extension are lifting-force surfaces that contribute to the overall spreading force of the trawl door, and their exposed position on the trawl door is therefore difficult to protect from possible bumps and accidental mechanical impacts, hence, it is an object of the present invention to provide a trawl door with a robust energy-efficient control concept.

WO 2013/014507 A1 discloses a spreading device in the form of a trawl door, deflector, vane or paravane constructed with adjustable panels and driving units for controlling the water flow through the spreading device during towing through the water with remote control where driving units are used to adjust the position of the panels to control the water flow through the spreading device and maneuver the spreading device in optimum position in the towing direction, horizontally or vertically, wherein the panels are adjustable independently to give enhanced performance of the operating systems, fishing trawl or seismic survey system, without having to pull the system to the towing vessel to adjust manually.

### Summary of the invention

Unless otherwise defined, all terms used herein (including technical and scientific terms) have the same meaning as commonly understood by those skilled in the art to which this invention pertains. It will be further understood that terms, such as those defined in commonly used dictionaries, should be interpreted as having a meaning that is consistent with their meaning in the context of the relevant art and will not be interpreted in an idealized or overly formal sense unless expressly so defined in the present specification.

All directions in regards to the trawl door as disclosed herein, such as upper, lower, horizontal forward/mid and aft end, all relate to the positions in or on the trawl door when the trawl door is in its operational position, such as in the water during trawl operation.

Disclosed herein in a first aspect of the invention defined in claim 1 is a trawl door comprising a plurality of hydrofoils extending in parallel in a longitudinal direction of the hydrofoils and being arranged in an overlapping sequence so that one or more flow channels are formed between neighbouring hydrofoils, one or more shutters extending in the longitudinal direction of the plurality of hydrofoils and arranged at a pressure side of the plurality of hydrofoils, drive means for rotating the one or more shutters about a pivoting axis extending in the longitudinal direction of the plurality of hydrofoils, wherein the drive means are arranged to rotate at least one of the shutters between a disengaged position and an engaged position, in which the engaged position of the at least one shutter substantially reduces or prevents a fluid flow through one or more of the flow channels during operation of the trawl door.

The disclosed trawl door has an energy-efficient control concept. The drive means is placed to control the position of the one or more shutters. Each shutter can be controlled by the drive means and rotate around the pivoting axis. The energy amount required to make the shutters pivot around their pivoting axis is kept minimal by orientating said controllable shutters such that they, upon pivoting, move substantially parallel to their own main surfaces such that water pressure forces are directed substantially perpendicular to the moving direction of the shutters. As disclosed herein, the term "substantially parallel" is used to describe a flat or curved plate motion, which is in-planar within a +/- 15 degree tolerance.

As disclosed herein, the term "substantially perpendicular" is used to describe pressure force directions that are oriented 90 degrees off the flat or curved plate motion within a +/- 15 degree tolerance.

As used herein, the term "energy efficiency" is used in the sense that very little mechanical work is needed to pivot the parts of the trawl door, which change the trawl door lift forces and positional equilibrium. This is obtained by letting the shutters pivot, not slide, around a rotational centre, such that said shutters main surfaces move substantially perpendicular to the water pressure forces instead of substantially parallel to the water pressure forces, when the trawl door is used during trawl operations. Via this setup the main surfaces of the shutters must overcome only small water friction forces, however the otherwise dominating water pressure forces are reduced to a minimum, and hereby the trawl door obtains an energy-efficient control concept.

In physical terms, the mechanical work (i.e. energy) needed to move an object; say from point A to point B in a pressure field, is described by the vector integration from A to B of pressure force times distance increment. If the pressure force vector is aligned (parallel) with the moved distance, then mechanical work is performed. Contrarily, if the pressure force vector is perpendicular or almost perpendicular to the moved distance, then the mechanical work remains zero, or almost zero, such that the movement requires no or very little energy.

The term "robust" is used in the sense that the moveable shutters main surfaces are easily positioned inside the trawl door in a manner that protects them and prevents them from bumps and mechanical hard impacts, e.g. when the trawl door is dumped into the seabed, during trawl door transportation, or when the trawl door is hauled up from the sea and wire-pulled to a hard stop against the back end of the ship hull.

Disclosed herein in a second aspect of the invention defined in claim 9 is use of a set of trawl doors comprising one starboard trawl door and one port trawl door, for trawling operations, wherein each of the trawl doors comprises a plurality of hydrofoils extending in parallel in a longitudinal direction of the hydrofoils and being arranged in an overlapping sequence so that one or more flow channels are formed between neighbouring hydrofoils, one or more shutters extending in the longitudinal direction of the plurality of hydrofoils and arranged at a pressure side of the plurality of hydrofoils, drive means for rotating the one or more shutters about a pivoting axis extending in the longitudinal direction of the plurality of hydrofoils, wherein the drive means are arranged to rotate at least one of the shutters between a disengaged position and an engaged position, in which engaged position the at least one shutter substantially reduces or prevents a fluid flow through one or more of the flow channels during operation of the trawl door.

Disclosed herein in a third aspect of the invention defined in claim 10 is use of a set of trawl doors comprising one starboard trawl door and one port trawl door, for towing a fishing trawl net, wherein a fishing vessel is towing the set of trawl doors, and wherein each of the trawl doors comprises a plurality of hydrofoils extending in parallel in a longitudinal direction of the hydrofoils and being arranged in an overlapping sequence so that one or more flow channels are formed between neighbouring hydrofoils, one or more shutters extending in the longitudinal direction of the plurality of hydrofoils and arranged at a pressure side of the plurality of hydrofoils, drive means for rotating the one or more shutters about a pivoting axis extending in the longitudinal direction of the plurality of hydrofoils, wherein the drive means are arranged to rotate at least one of the shutters between a disengaged position and an engaged position, in which engaged position the at least one shutter substantially reduces or prevents a fluid flow through one or more of the flow channels during operation of the trawl door.

Disclosed herein in a fourth aspect of the invention defined in claim 11 is use of a set of trawl doors comprising one starboard trawl door and one port trawl door, for towing seismic equipment for seabed measurements for measuring the seabed composition, and wherein each of the trawl doors comprises a plurality of hydrofoils extending in parallel in a longitudinal direction of the hydrofoils and being arranged in an overlapping sequence so that one or more flow channels are formed between neighbouring hydrofoils, one or more shutters extending in the longitudinal direction of the plurality of hydrofoils and arranged at a pressure side of the plurality of hydrofoils, drive means for rotating the one or more shutters about a pivoting axis extending in the longitudinal direction of the plurality of hydrofoils, wherein the drive means are arranged to rotate at least one of the shutters between a disengaged position and an engaged position, in which engaged position the at least one shutter substantially reduces or prevents a fluid flow through one or more of the flow channels during operation of the trawl door.

The term "comprising", "comprises", or "to comprise" is to be interpreted as specifying the presence of the stated parts, steps, features, or components, but does not exclude the presence of one of more additional parts, steps, features, or components.

### Brief description of the drawings

In the following, exemplary embodiments of the invention are described in more detail with reference to the figures, of which
- Fig. 1: is a trawling vessel with trawl doors and trawl as seen in perspective.
- Fig. 2: is a cross-sectional view of a trawl door with energy-efficient shutters where the pivoting axis is inside a round-shaped elongated element and the shutters are shown in a) disengaged position, b) mid-position, and c) engaged position.
- Fig. 3: is a cross-sectional view of a trawl door with energy-efficient shutters where the pivoting axis and a spindle arrangement used for actuation are inside a round-shaped elongated element, and the shutters are shown in a) disengaged position, b) mid-position, and c) engaged position.
- Fig. 4: is a perspective view of the trawl door from figure 3, as seen from two sides a) and b).
- Fig. 5: is a cross-sectional view of a trawl door with a high-lift providing round-shaped elongated element.
- Fig. 6: is another example of a cross-sectional view of a trawl door with a high-lift round-shaped elongated element.
- Fig. 7: is an example of a cross-sectional view of a trawl door with a high-lift providing round-shaped elongated element with flow streamline visualization.
- Fig. 8: is a perspective view of a trawl door with a high-lift providing round-shaped elongated element.
- Fig. 9: is another perspective view of a trawl door with a high-lift providing round-shaped elongated element.
- Fig. 10: is a cross-sectional view of a trawl door with energy-efficient shutters where the pivoting axis is inside a round-shaped elongated element and the shutters are shown in a) disengaged position, b) mid-position, and c) engaged position.
- Fig. 11: is a perspective view of the trawl door from figure 10, as seen from two sides a) and b), and where the round-shaped elongated element is made invisible in b).
- Fig. 12: is a cross-sectional view of a trawl door with energy-efficient shutters where the pivoting axis and drive means are inside a round-shaped elongated element, and the shutters are shown in a) disengaged position, b) mid-position, and c) engaged position.
- Fig. 13: is a cross-sectional view of a trawl door with energy-efficient shutters where the pivoting axis and another example of drive means are inside a round-shaped elongated element, and the shutters are shown in a) disengaged position, b) mid-position, and c) engaged position.
- Fig. 14: is a cross-sectional view of a trawl door with energy-efficient shutters where the pivoting axis and another example of drive means are inside a semi-round-shaped elongated element, and the shutters are shown in a) disengaged position, b) mid-position, and c) engaged position.

**Detailed description of the invention** The invention relates to a trawl door comprising a plurality of hydrofoils extending in parallel in a longitudinal direction of the hydrofoils and being arranged in an overlapping sequence so that one or more flow channels are formed between neighbouring hydrofoils, one or more shutters extending in the longitudinal direction of the plurality of hydrofoils and arranged at a pressure side of the plurality of hydrofoils, drive means for rotating the one or more shutters about a pivoting axis extending in the longitudinal direction of the plurality of hydrofoils, wherein the drive means are arranged to rotate at least one of the shutters between a disengaged position and an engaged position, in which engaged position the at least one shutter substantially reduces or prevents a fluid flow through one or more of the flow channels during operation of the trawl door.

The disclosed trawl door has an energy-efficient control concept. The drive means is placed to control the position of the one or more shutters. Each shutter can be controlled by the drive means and rotate around the pivoting axis. The energy amount required to make the shutters pivot around their pivoting axis is kept minimal by orientating said controllable shutters such that they, upon pivoting, move substantially parallel to their own main surfaces such that water pressure forces are directed substantially perpendicular to the moving direction of the shutters.

Hence, the shutters are orientated such that they, upon pivoting during operation of the trawl door, move substantially parallel to their own main surfaces such that water pressure forces are directed substantially perpendicular to the moving direction of the shutters. This means that very little mechanical work is needed to pivot the parts of the trawl door, which change the trawl door lift forces and positional equilibrium. This is obtained by letting the shutters pivot, not slide, around a rotational centre, such that said shutters main surfaces move substantially perpendicular to the water pressure forces instead of substantially parallel to the water pressure forces, when the trawl door is used during trawl operations. Via this setup the main surfaces of the shutters must overcome only small water friction forces, however the otherwise dominating water pressure forces are reduced to a minimum, and hereby the trawl door obtains an energy-efficient control concept. Hence, the shutters pivot around the pivoting axis, such that the shutters main surfaces move substantially perpendicular to the water pressure forces during trawl operations.

In one or more embodiments, the shutters are orientated such that the water pressure forces are directed substantially through the shutter pivoting axis during trawl operations.

The disclosed trawl door may comprise an upper half and a lower half when vertically positioned, as during normal trawl operation, hence, in one or more embodiments, the trawl door is made of a first half and a second half. The trawl door may however, not be limited to be made of only two halves.

If the trawl door comprises an upper half and a lower half, a first drive means is placed to control the position of one or more shutters placed in the upper half of the trawl door, and a second drive means is placed to control the position of the one or more shutters placed in the lower half of the trawl door.

In one or more embodiments, the trawl door is made of a first half and a second half, wherein the first half comprises a first set of one or more shutters and the second half comprises a second set of one or more shutters, and wherein the first drive means is placed to control the position of the first set of one or more shutters and the second drive means is placed to control the position of the second set of one or more shutters.

By having at least two sets of one or more shutters, arranging them in two halves of the trawl door, and by being able to engage/disengage only one, or both of them, individually (via the drive means), the trawl door is able to not only be controlled in one direction, but in two directions, i.e. side-to-side and up-and-down.

In one or more embodiment, the trawl door comprises additional drive means, such as a third and a fourth drive means, such as a third, a fourth, a fifth, and a sixth drive means, or such as a third, a fourth, a fifth, a sixth, a seventh, and an eighth drive means.

In one or more embodiments, the trawl door further comprises one or more front wire attachment holes and one or more rear bridle attachment holes. The front wire attachment holes and rear bridle attachment holes may be in the horizontal forward/mid and aft end of the trawl door, respectively.

In one or more embodiments, the trawl door comprises at least two shutters, such as at least three, such as at least four, such as at least five, or such as at least six shutters.

Each shutter can rotate around a pivoting axis, where a fixation device may structurally connect the shutters to the pivoting axes. The energy amount required to make shutters pivot around their pivoting axis is kept minimal by orientating said shutters such that they, upon pivoting, move substantially parallel to their own main surfaces such that water pressure forces are directed substantially perpendicular to the moving direction of the shutters. Hence, the shutters are configured to move substantially parallel to their own main surfaces such that water pressure forces are directed substantially perpendicular to the moving direction of the shutters, and said forces pointing substantially through the shutter pivoting axis, when the shutters pivot around their pivoting axis during operation of the trawl door.

Further, the shutters are configured to move substantially parallel to their own main surfaces such that water pressure forces are directed substantially perpendicular to the moving direction of the shutters, and said forces pointing substantially through the shutter pivoting axis, when the shutters pivot around their pivoting axis during operation of the trawl door.

The pivoting around the axis may be limited, such that entire revolutions of the shutters around the pivoting axis is not possible. By an entire revolution of the shutters around the pivoting axis is meant that the shutters is rotated 360 degrees around the axis without being blocked of forced into other parts of the trawl door.

In one or more embodiments, the trawl door comprises at least two fixation devices, such as at least three, such as at least four, such as at least five, or such as at least six fixation devices.

In one or more embodiments, the one or more shutters are split into a first set of one or more shutters and a second set of one or more shutters, and wherein a first drive means is arranged to control the position of the first set of the one or more shutters and a second drive means is arranged to control the position of the second set of the one or more shutters.

The first and the second drive means arranged to control the position of the one or more shutters may be actuators, which means that when the actuator is extended, the shutters are rotated around the pivoting axis in one direction, and when the actuators are retracted, the shutters are rotated around the pivoting axis in the opposite direction.

In one or more embodiments, the drive means are one or more actuators arranged to rotate at least one of the shutters between the disengaged position and the engaged position. In another embodiment, the drive means are one or more gear devices comprising at least two gear parts.

In one or more embodiments, the trawl door further comprises one or more front wire attachment holes. Front wire attachment holes are used to connect one or several wires from the fishing vessel to the trawl door, so the trawl door may be used during trawling operations.

In one or more embodiments, the one or more front wire attachment holes are positioned in the horizontal forward/mid of the trawl door.

In one or more embodiments, the trawl door further comprises one or more rear bridle attachment holes. Rear bridle attachment holes may be used to connect one or several wires from the fishing net/trawling net to the trawl door, so the trawl door may be used during trawling operations for dragging a fishing net/trawling net. The trawl door may also be used for towing seismic equipment for seabed measurements used for measuring the seabed composition.

In one or more embodiments, the one or more rear bridle attachment holes are positioned in the aft end of the trawl door.

In one or more embodiments, the trawl door further comprises section endplates and stiffeners.

The drive means is arranged to operate the shutters from a disengaged positon to an engaged position and vice versa. In one or more embodiments, the at least one shutter substantially reduces or prevents a fluid flow through one or more of the flow channels during operation of the trawl door by at least 50%. A 50% reduction may also be seen as a reduction of the flow by a factor of two, i.e. halving the flow through the flow channel in the engaged state compared to the disengaged position.

In one or more embodiments, the at least one shutter substantially reduces or prevents a fluid flow through one or more of the flow channels during operation of the trawl door by at least 75%. A 75% reduction may also be seen as a reduction of the flow by a factor of four, i.e. only a quarter of the flow is let through the flow channel in the engaged state compared to the disengaged position.

In one or more embodiments, the at least one shutter substantially reduces or prevents a fluid flow through one or more of the flow channels during operation of the trawl door by at least 90%. A 90% reduction may also be seen as a reduction of the flow by a factor of ten, i.e. only a one tenth of the flow is let through the flow channel in the engaged state compared to the disengaged position.

In one or more embodiments, the at least one shutter substantially reduces or prevents a fluid flow through one or more of the flow channels during operation of the trawl door by at least 99%. A 99% reduction may also be seen as a reduction of the flow by a factor of one hundred, i.e. only a one hundredth of the flow is let through the flow channel in the engaged state compared to the disengaged position.

The shutter may also almost completely block the flow through the flow channel, hence, in one or more embodiments, the at least one shutter substantially blocks a fluid flow through one or more of the flow channels during operation of the trawl door.

In one or more embodiments, the pivoting axis is arranged to allow rotational movement of the at least one shutter of up to 300 degrees.

In one or more embodiments, the shutter is not allowed full revolutions around the pivoting axis.

In one or more embodiments, the shutter is configured to prevent full revolutions around the pivoting axis.

In one or more embodiments, the pivoting axis is arranged to allow rotational movement of the at least one shutter of up to 300 degrees, such as up to 290 degrees, such as up to 280 degrees, such as up to 270 degrees, such as up to 260 degrees, such as up to 250 degrees, but without allowing a full revolutions around the pivoting axis.

The pivoting around the axis may be limited, such that entire revolutions of the shutters around the pivoting axis is not possible. By an entire revolution of the shutters around the pivoting axis is meant that the shutters are rotated 360 degrees around the axis without being blocked or forced into other parts of the trawl door.

The trawl door may further comprise one or more fixation devices, which may be used to structurally connect the shutters to the pivoting axes. Hence, in one or more embodiments, the trawl door further comprises one or more fixation devices, wherein the one or more fixation devices are arranged to structurally connect the at least one shutter to the pivoting axis.

In one or more embodiments, the trawl door comprises at least two fixation devices, such as at least three, such as at least four, such as at least five, or such as at least six fixation devices.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils. The plurality of hydrofoils, as disclosed herein, may be multiple hydrofoils, such as 3, 4, 5, 6 hydrofoils. The sequence of hydrofoils will be defined by a leading edge, the foremost edge when dragging/trawling the trawl door through water during trawling operation, and a trailing edge, the rearmost edge when dragging/trawling the trawl door through water during trawling operation.

In one or more embodiments, the plurality of hydrofoils at least comprises the first hydrofoil defining the leading edge of the overlapping sequence of the plurality of hydrofoils and the last hydrofoil defining the trailing edge of the overlapping sequence of the plurality of hydrofoils and one or more middle hydrofoils positioned between the first hydrofoil and the last hydrofoil.

In one or more embodiments, the one or more middle hydrofoils comprises at least two hydrofoils.

In one or more embodiments, the plurality of hydrofoils comprises at least three hydrofoils. In one or more embodiments, the plurality of hydrofoils comprises at least four hydrofoils.

In one or more embodiments, the trawl door further comprises at least one round-shaped elongated element, wherein the at least one round-shaped elongated element extends in a longitudinal direction parallel to the longitudinal direction of the hydrofoils.

It is known from fluid dynamic theory, (see e.g. Smith, A.M.O., High-Lift Aerodynamics, Journal of Aircraft, 1975, 12(6), pp. 501-530), that a circular tube ideally has the highest potential of all shapes for deflecting a flow, i.e. for creating lift force. The word "ideally" means that it is assumed there is no hydrodynamic/aerodynamic stall. However, in real life stall this is unavoidable. Any non-streamlined geometry, such as box-shaped, circular, or otherwise blunt bodies will create flow separation and subsequent stall when the flow fails to run smoothly over the geometry's entire surface.

Furthermore, a circular tube has an omni-directional cross-section, so lift-forces will appear symmetrically around the tube thereby cancelling each other.

A round-shaped elongated element as disclosed herein is an element, which in its cross-section is circular or elliptically shaped. This does not mean that the element needs to be perfectly elliptical, but can have minor variation in its cross-sectional shape. However, the element as disclosed herein is not a hydrofoil or has a hydro-profile shape with a defined leading edge and trailing edge.

Compared to standard multi-element trawl doors, the use of a round-shaped elongated element can improve the lift coefficient by approximately 50%.

An additional benefit is that the absence of hydrofoil characteristics such as a leading edge and a trailing edge on the tube element causes the tube element to be quite insensitive to incidence angle between the flow passing the trawl door and the trawl, which is also known as the Angle-of-Attack (AoA). A trawl door with a tube element will therefore be able to operate well and create a high lift force over a large AoA range of up to 35 degrees. For standard known trawl doors, the operative AoA range is approximately 20 degrees. A higher operative AoA range is a benefit in general, and specifically when the trawl doors experience different AoAs, e.g. when fishing in crosscurrent conditions and/or when the trawler makes a 180 degree turn.

In one or more embodiments, the at least one round-shaped elongated element is positioned at a pressure side of the plurality of hydrofoils and at a rear part of the overlapping sequence of the plurality of hydrofoils in such a way that the at least one round-shaped elongated element forms a structurally connected integrated part to the plurality of hydrofoils such that at least one flow channel is formed between the at least one round-shaped elongated element and the last hydrofoil of the overlapping sequence of the plurality of hydrofoils.

Using a circular tube as an ideal lift-creating hydrodynamic element, by combining it with a series of regular hydrofoils, such that the flow passing the tube, which would otherwise separate and create stall, is guided inside a flow channel between one side of the circular tube and one or several of the regular hydrofoils, such that stall is completely suppressed or at least substantially delayed. Elimination of stall on one side of the circular tube will create a high deflection of the flow around the tube, in fluid dynamic theory known as "circulation", thereby creating lift.

The circular tube will not only create lift acting on the circular tube itself, but the circulation will also increase the lift forces created by the regular hydrofoils, such that the lift coefficient of the entire trawl door is increased.

The technical term "lift coefficient" is a dimensionless coefficient that relates the lift generated by a lifting body to the fluid density around the body, the fluid velocity and an associated reference area. A lifting body is a foil or a complete foil-bearing body such as a fixed-wing aircraft or a trawl door.

The flow channel formed between the round-shaped elongated element and the last hydrofoil of the overlapping sequence of hydrofoils is arranged to guide a flow of water and is arranged to suppress hydrodynamic stall, which would otherwise be generated around the round-shaped elongated element, if the overlapping sequence of hydrofoils were not there.

The width of the flow channel formed between the elongated element and the last hydrofoil may be defined in terms of the width of the other flow channels formed between neighbouring hydrofoils. Hence, in one or more the width of the at least one flow channel formed between the at least one round-shaped elongated element and the last hydrofoil of the overlapping sequence of the plurality of hydrofoils is between 50% and 200% of the width of the one or more flow channels formed between neighbouring hydrofoils.

By the width of the one or more flow channels formed between neighbouring hydrofoils is meant that if there is multiple channels between neighbouring hydrofoils, and if the width of these flow channels are not substantially the same, and average of the width of these flow channels is taken and used as "the width of the one or more flow channels formed between neighbouring hydrofoils".

If it is assumed that the cross-section of the elongated element is perfectly elliptical, that means that the minor variation in its cross-sectional shape can be disregarded, the elongated element can further be described via the eccentricity. The eccentricity of an ellipse has a well-known mathematical meaning/definition, which a person skilled in the art is fully aware of, and knows how to calculate. If the cross-sectional shape is not perfectly elliptical, the eccentricity (e) may be defined as e = (1-b^2/a^2)^(1/2), where a is the length of the major axis and b is the length of the minor axis.

In one or more embodiments, the at least one round-shaped elongated element has an eccentricity at or below 0.88, such as at or below 0.85, such as at or below 0.80, such as at or below 0.70, such as at or below 0.65.

In one or more embodiments, the at least one round-shaped elongated element has an eccentricity at or above 0.05, such as at or above 0.10.

In one or more embodiments, the at least one round-shaped elongated element has an eccentricity between 0 and 0.88, such as between 0 and 0.85, such as between 0 and 0.80, such as between 0 and 0.70, such as between 0 and 0.65.

In one or more embodiments, the at least one round-shaped elongated element has an eccentricity between 0.05 and 0.88 such as between 0.05 and 0.65.

In one or more embodiments, the at least one round-shaped elongated element has an eccentricity between 0.1 and 0.88, such as between 0.1 and 0.65.

In one or more embodiments, the trawl door has a chord length defined as the chord length measured from a leading edge of a first hydrofoil of the overlapping sequence of the plurality of hydrofoils to a trailing edge of a last hydrofoil of the overlapping sequence of the plurality of hydrofoils.

In one or more embodiments, the at least one round-shaped elongated element has an elliptically shaped cross-section, having a minor axis and a major axis, and wherein the major axis is between 5% and 75% of the chord length and the ratio between the minor axis and the major axis is between 0.5 and 1.0.

The size of the elongated element is further defined by the length of the major axis of the elongated element compare to the chord length of the trawl door. The chord length of the trawl door is defined as the chord length measured from the leading edge of the first hydrofoil to the trailing edge of the last hydrofoil. In one or more embodiments, the major axis is between 5% and 70% of the chord length, such as between 5% and 70%, such as between 5% and 65%, such as between 5% and 60%, such as between 5% and 55%, such as between 5% and 50%, such as between 5% and 45%, such as between 5% and 40%, of the chord length.

In one or more embodiments, the major axis is between 10% and 75% of the chord length, such as between 15% and 75%, such as between 20% and 75%, such as between 25% and 75%, such as between 30% and 75%, such as between 35% and 75%, such as between 40% and 75% of the chord length.

In one or more embodiments, the major axis is between 10% and 70% of the chord length, such as between 15% and 70%, such as between 15% and 65%, such as between 20% and 65%, such as between 25% and 65% of the chord length.

The cross-sectional shape of the elongated element is further defined by the ratio between the minor and major axes of the elongated element. In one or more embodiments, the ratio between the minor axis and the major axis is between 0.50 and 1.00, such as between 0.55 and 1.00, such as between 0.60 and 1.00, such as between 0.65 and 1.00, such as between 0.70 and 1.00.

In one or more embodiments, the ratio between the minor axis and the major axis is between 0.50 and 0.95, such as between 0.50 and 0.90, such as between 0.50 and 0.85, such as between 0.50 and 0.50, such as between 0.50 and 0.75.

In one or more embodiments, the ratio between the minor axis and the major axis is between 0.50 and 0.95, such as between 0.55 and 0.95, such as between 0.60 and 0.95, such as between 0.65 and 0.95, such as between 0.70 and 0.95.

In one or more embodiments, the ratio between the minor axis and the major axis is between 0.50 and 0.90, such as between 0.55 and 0.90, such as between 0.60 and 0.90, such as between 0.65 and 0.90, such as between 0.70 and 0.90, such as between 0.75 and 0.90, such as between 0.80 and 0.90, such as between 0.85 and 0.90.

The pivoting axis for rotating the one or more shutters about, which extends in the longitudinal direction of the plurality of hydrofoils, may be located inside the elongated element. Hence, in one or more embodiments, the pivoting axis is located inside the at least one round-shaped elongated element.

Further technical equipment may be positioned inside the elongated element. In one or more embodiments, technical equipment for control of the trawl door is positioned inside the at least one round-shaped elongated element.

In one or more embodiments, the at least one round-shaped elongated element comprises an interior cavity.

An interior cavity as disclosed herein is to be understood as a cavity, which are in fluid connection with water during trawling operation, i.e. the cavity is to be flooded with water whenever the trawl door is submerged in water, e.g. during normal trawling operation. This means, that the cavity is not an interior closed cavity, but at least comprises one opening in which it can be in fluid connected with water.

In one or more embodiments, the interior cavity is in fluid connection with water surrounding the at least one round-shaped elongated element during operation of the trawl door.

In one or more embodiments, the interior cavity extends through the at least one round-shaped elongated element in the longitudinal direction of at least one round-shaped elongated element. The interior cavity of the at least one round-shaped elongated element may comprise electro-mechanical devices, such as sensor equipment, battery power, or hydraulic systems. The cavity may also comprise other components, such as buoyancy or gravity elements.

In one or more embodiments, a first part of the interior cavity comprises one or more buoyancy elements. In one or more embodiments, a second part of the interior cavity comprises one or more gravity elements.

A buoyancy element is an element, with a mass density lower than the mass density of water, such as seawater. The buoyancy element may e.g. be made of syntactic foam encapsulated in a polyethylene external skin. The buoyancy element can be optimized to reach the required buoyancy at operating water depth.

A gravity element is an element, with a mass density higher than the mass density of water, such as seawater. The gravity element may e.g. be made of iron or another density heavy material. The gravity element can be optimized to reach the required volume gravity mass at operating water depth

The elongated element may comprise additional holes being in fluid connection with the surrounding water during trawling operations. Hence, in one or more embodiments, the at least one round-shaped elongated element comprises an interior cavity and wherein one or more holes extends perpendicular to the longitudinal direction of the at least one round-shaped elongated element and extends from the interior cavity through the at least one round-shaped elongated element. In one or more embodiments, the one or more holes are elliptically shaped.

By having these holes extending from the cavity of the elongated element and through the element easy and quick flooding of the cavity is obtained when the trawl door is submerged in water. Furthermore, these holes enable easy access to, and maintenance of, any electro-mechanical equipment being located inside the round elongated element cavity.

In one or more embodiments, the interior cavity comprises electro-mechanical devices, such as sensor equipment, battery power, or hydraulic systems.

In one or more embodiments, the at least one round-shaped elongated element further comprises a fixed add-on flap. A fixed add-on flap may be attached to the element to create extra fluid circulation. This may result in a slightly better lift coefficient, or help in preventing stall.

The shutters may be pivoted around the pivoting axis such that they are positioned inside the round-shaped elongated element when in disengaged position. Hence, in one or more embodiments the shutters, pivoting axis, and the round-shaped elongated element are all configured to pivot the shutters around the pivoting axis such that they are substantially positioned inside the round-shaped elongated element when in a disengaged position. By substantially is meant that a smaller part, such as 40% or less, such as 20% or less, such as 10% or less of the total area of the shutters are extending outside the circumference of the round-shaped elongated element.

In order for the round-shaped elongated element to be configured to pivot the shutters around the pivoting axis such that they are substantially positioned inside the round-shaped elongated element when in a disengaged position, requires that there is an opening in the longitudinal direction of the round-shaped elongated element. The opening should at least have a size corresponding to the size of the shutters, preferably between 1% and 5% larger in circumference compared to the circumference of the shutters. Although the longitudinal opening in the round-shaped elongated element makes the element slightly weaker structurally, this is not seen as a significant weakening as the construction is plenty strong and the opening is in a zone with only small structural tensions.

Further, by pivoting the shutters around the pivoting axis and into the inner of the round-shaped elongated element, the inactive shutters does not interfere with the flow at all or only interfere to a minor degree. Additionally, relative short shutters limit the force needed for actuation/movement around the pivoting axis when going from disengaged to engaged position or vice versa. Lastly, the disengaged shutters are well protected inside when located inside the round-shaped elongated element when the trawl door is inactive, e.g. during transport or other handling or when the trawl door hang inertly on the rear of the fishing vessel.

The trawl door may be divided into two or several sections. In one or more embodiments, the trawl door is divided into a first half and a second half, wherein the first half comprises a first half of the plurality of hydrofoils and a first half of the one or more shutters, and wherein the second half comprises a second half of the plurality of hydrofoils and a second half of the one or more shutters. The trawl door may also be divided into three parts, four parts, five parts, etc.

In one or more embodiments, the trawl door is divided into a first half and a second half, wherein the first half comprises a first half of the plurality of hydrofoils, a first half of the one or more shutters, and a first half of the at least one round-shaped elongated element, and wherein the second half comprises a second half of the plurality of hydrofoils a second half of the one or more shutters, and a second half of the at least one round-shaped elongated element.

If the trawl door is divided into two halves, the cavity in one-half of the element may contain buoyancy elements. In one or more embodiments, the interior cavity of the first half of the at least one round-shaped elongated element comprises one or more buoyancy elements. The cavity in the other half of the element may contain gravity elements. In one or more embodiments, the interior cavity of the second half of the at least one round-shaped elongated element comprises one or more gravity elements.

The shape of the trawl door in the span wise direction may vary. In one or more embodiments, the trawl door is linear along the span wise direction. In another embodiment, the trawl door is curved, bent, or angled, along the span wise direction. In yet another embodiment, the trawl door comprises two halves, wherein the two halves are linear along the span wise direction of each half, and wherein the two halves are connected to form a non-linear angle of the trawl door along the span wise direction of the trawl door.

By "span wise" is meant the dimension along the length of the trawl door perpendicular to the passing water when in use. When the trawl door is vertically erected, the span wise direction is the vertical direction.

In practice, a trawl door will probably never be curved in the span wise direction, as it will require double-curved surfaces and thus impossible to make in a simple manufacture using rolled steel sheets. Many trawl doors used today have one or more bends of 5, 10, 12, or 16 degrees. This may make the span wise direction of the trawl door appear curved, but in reality, it is constructed of multiple linear pieces connected with bends between each piece.

In one or more embodiments, the trawl door comprises plurality of linear pieces connected with bends of between 2 and 20 degrees between each piece in the span wise direction.

The shape/arrangement of the trawl door may further be defined. In one or more embodiments, the plurality of hydrofoils are one-sided.

By one-sided is meant that the hydrofoil is made by just one flat or curved plate, such that the pressure side and suction side are offset only by the plate thickness.

In one or more embodiments, the plurality of one-sided hydrofoils are made by rolled metal sheets.

In one or more embodiments, the plurality of hydrofoils are double-sided.

In one or more embodiments, the plurality of hydrofoils are hybrids between single-sided and double-sided.

The trawl door as disclosed herein may be used for multiple variations of trawl operation. Hence, in one or more embodiments, the trawl door is of pelagic type, semi-pelagic type, bottom-door type, or combinations hereof.

The hydrofoils, shutters, and/or the elongated element may be made of the same or different material. In one or more embodiments, one or more of the plurality of hydrofoils, and/or the one or more shutters, and/or the at least one round-shaped elongated element are made from metal or a lightweight material such as plastic or rubber, wood, or fibreboard material.

In one or more embodiments, one or more of the plurality of hydrofoils are made from metal or a lightweight material such as plastic or rubber, wood, or fibreboard material.

In one or more embodiments, one or more of the shutters are made from metal or a lightweight material such as plastic or rubber, wood, or fibreboard material.

In one or more embodiments, the at least one round-shaped elongated element is made from metal or a lightweight material such as plastic or rubber, wood, or fibreboard material.

When describing the embodiments, the combinations and permutations of all possible embodiments have not been explicitly described. Nevertheless, the mere fact that certain measures are recited in mutually different dependent claims or described in different embodiments does not indicate that a combination of these measures cannot be used to advantage. The present invention envisage all possible combinations and permutations of the described embodiments.

### Detailed description of the drawings

Various examples are described hereinafter with reference to the figures. It should also be noted that the figures are only intended to facilitate the description of the examples. They are not intended as an exhaustive description of the claimed invention or as a limitation on the scope of the claimed invention. In addition, an illustrated example needs not have all the aspects or advantages shown. An aspect or an advantage described in conjunction with a particular example is not necessarily limited to that example and can be practiced in any other examples even if not so illustrated, or if not so explicitly described.

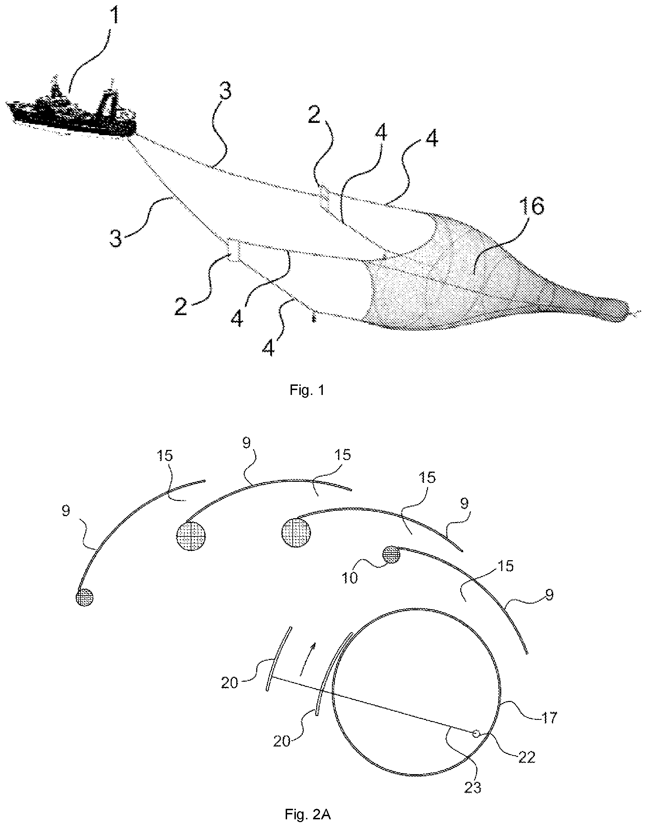

Fig. 1 is a perspective view of a conventional trawling operation comprising a (towing) fishing vessel 1 towing a set of a starboard and a port trawl doors 2, which provide spreading force for the fishing trawl net 16 being towed by said set of trawl doors 2. The figure shows, how the trawl doors 2 are connected and trawled by the fishing vessel 1 via a wire 3 connected to each trawl door 2. These wires 3 may be attached as seen in the figure in the mid-section of the trawl door 2 e.g. via one or more attachment holes. The fishing trawl net 16 is connected to each trawl door 2 via two bridles 4. These may be, as shown here, be connected to the trawl door 2 in the aft top and bottom of the trawl door 2.

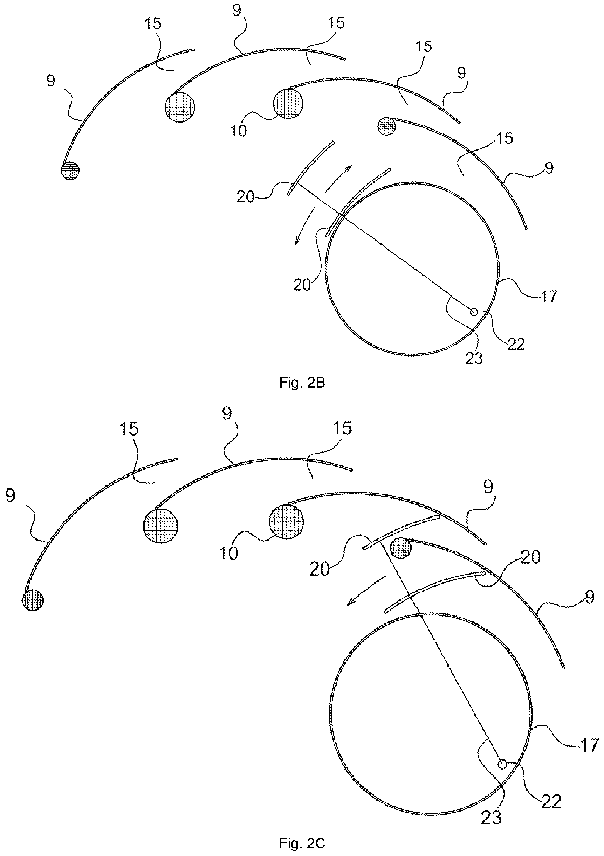

Fig. 2 is a cross-sectional view of a trawl door with energy-efficient shutters where the pivoting axis 22 is inside a round-shaped elongated element 17 and the shutters 20 are shown in a) disengaged position, b) mid-position, and c) engaged position. The trawl door comprises several hydrofoils 9, each with a leading edge and a trailing edge, and a round-shaped elongated element 17 positioned on the pressure side of the several hydrofoils 9. A notable feature is the mix of a round shaped leading edge of the hydrofoils 9 and a curved-sheet "single-sided" trailing edge of the hydrofoils 9. The mixed hydrofoils 9 still contain the usual hydrofoil characteristics: A leading edge, a trailing edge, slenderness, and camber. The depicted round-shaped elongated element 17 comprises the pivoting axis 22 on which the shutters 20 pivot around when moving from the engaged position c) to the mid-position b) and further to the disengaged position a) (c) 4 b) → a)), or vice versa (a) → b) → c)). The shutters 20 are shown connected to the pivoting axis 22 by fixations devices 23. The embodiment shows how the shutters 20 closes two of the flow channels, the flow channel between the last hydrofoil 9 and its neighbouring hydrofoil 9 and the flow channel between the last hydrofoil 9 and the round-shaped elongated element 17. The flow channels are here closed so the substantially blocks all fluid flow through the two flow channels, however a small amount of flow may continue to flow "below" the shutter 20 and up through the flow channels.

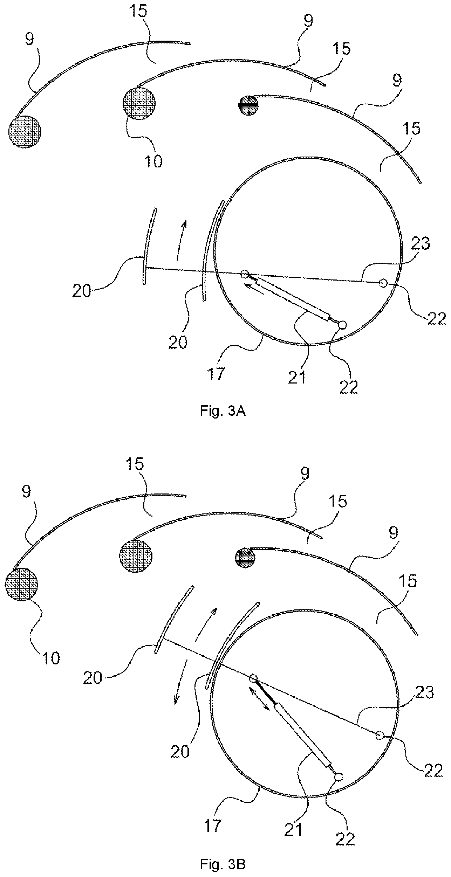

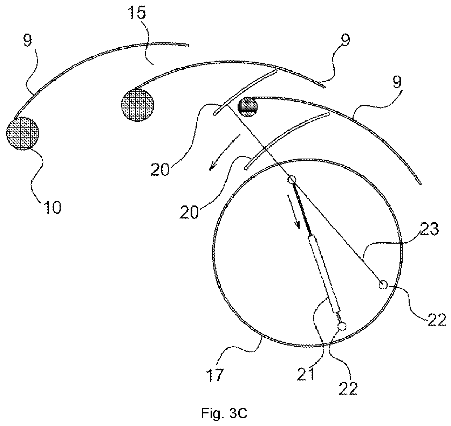

Fig. 3 is a cross-sectional view of a trawl door with energy-efficient shutters 20 where the pivoting axis 22 and drive means 21, are inside a round-shaped elongated element 17, and the shutters 20 are shown in a) disengaged position, b) mid-position, and c) engaged position. The drive means 21 here comprise of a spindle arrangement used for actuation, which will then pivot the shutters 20 around the pivoting axis 22. The shutters 20 and drive means 21 are shown connected to the pivoting axis 22 by fixations devices 23.

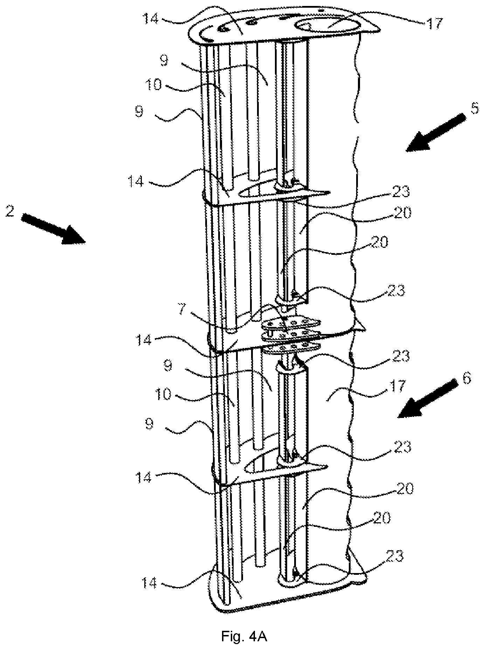

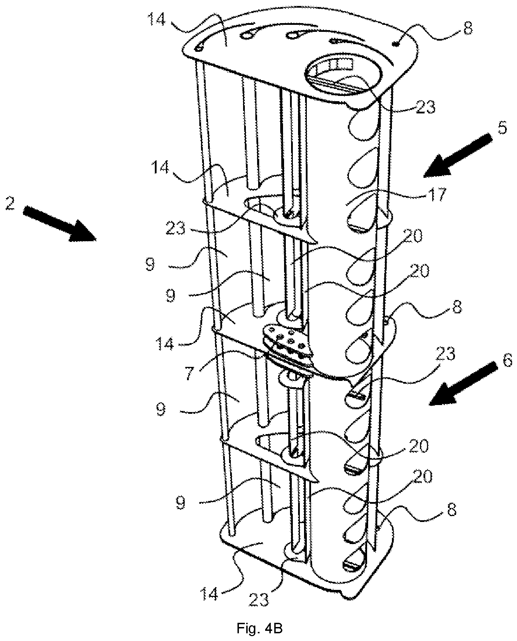

Fig. 4 is a perspective view of the trawl door 2 from figure 3, as seen from two sides a) and b). The trawl door 2 first half 5 and the trawl door 2 second half 6, both comprising hydrofoils 9, leading edges 10, trailing edges, section endplates and stiffeners 14, rear bridle attachment holes 8, and a round-shaped elongated element 17. The trawl door 2 is seen from the pressure (concave) side. The bridles (not shown) towing the trawl may be attached to one of the upper and one of the lower rear bridle attachment holes 8, or one bridle will be attached to one of mid rear bridle attachment holes 8. Different types of bridle rigging are possible depending on the type of fishing trawl net to be used and what kind of fish to catch. The main wire (not shown) connecting the trawl door to the towing vessel may be attached to one of the front wire attachment holes 7. Alternative front wire attachment hole 7 designs may be used, such as the possibility of having front wire attachment holes 7 in different vertical heights slightly offset from the shown span wise mid-pos ition.

Further shows how the round-shaped elongated element 17 has an interior cavity with openings towards the surrounding environment. The embodiment shows one opening in the first half 5 or the trawl door 2. The opening can be seen extending through the section endplates 14. Further are the elliptically shaped openings (best seen in b)) extending perpendicular to the longitudinal direction of the round-shaped elongated element 17. These holes extends from the interior cavity of the round-shaped elongated element 17 through the round-shaped elongated element 17, hereby making the interior cavity being in fluid connection with the surrounding environment.

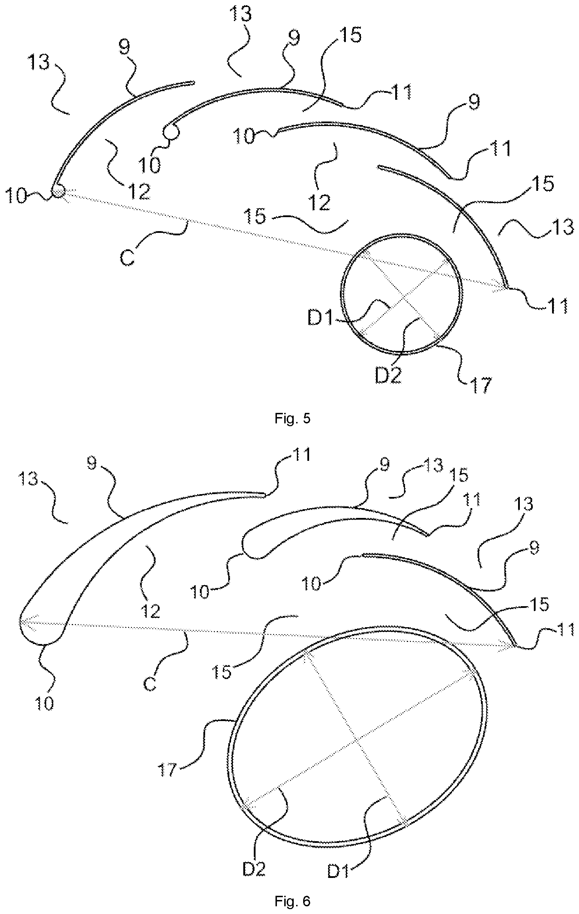

Fig. 5 is a cross-sectional view of a trawl door comprising several hydrofoils 9, each with a leading edge 10 and a trailing edge 11. The leading edge of the foremost hydrofoil 9 is the leading edge 10 of the trawl door, and the trailing edge 11 of the rearmost hydrofoil is the trailing edge 11 if the trawl door. The plurality of hydrofoils 9 are arranged so that flow channels 15 are formed between neighbouring hydrofoils 9.

In conjunction with the several hydrofoils is a round-shaped elongated element 17 positioned such that it forms a flow channel 15 with one or several of the hydrofoils 9, and at least form it with the last hydrofoil 9. Said flow channel 15 will suppress the flow separation and stall that would otherwise occur when the water flows past the round-shaped elongated element 17, i.e. in the absence of the one or several of the hydrofoils 9. The so-called "circulation" created by the round-shaped elongated element 17 will contribute to the overall deflection of the water passing the trawl door, thereby increasing the lift coefficient and enabling the trawl door to provide more spreading force to the towed trawl.

Also shown on fig. 5 are the trawl door's imaginary chord line C defined between the leading edge 10 of the first hydrofoil 9 of the overlapping sequence of the plurality of hydrofoils 9 to the trailing edge 11 of the last hydrofoil 9 of the overlapping sequence of the plurality of hydrofoils 9. Further shown are also the minor D1 and major D2 axes lengths of the round-shaped elongated element 17. When the round-shaped elongated element is perfectly circular, then the minor axis D1 and major axis D2 will have the same length, namely the circle diameter.

The hydrofoils 9, and the trawl door, is arranged so the pressure side 12 of the hydrofoil 9 is on the concave (inner) side of the cambered hydrofoils 9, and the suction side 13 is on the convex (outer) side of said hydrofoils 9. The round-shaped elongated element 17 is positioned on the pressure side 12 of the hydrofoils 9.

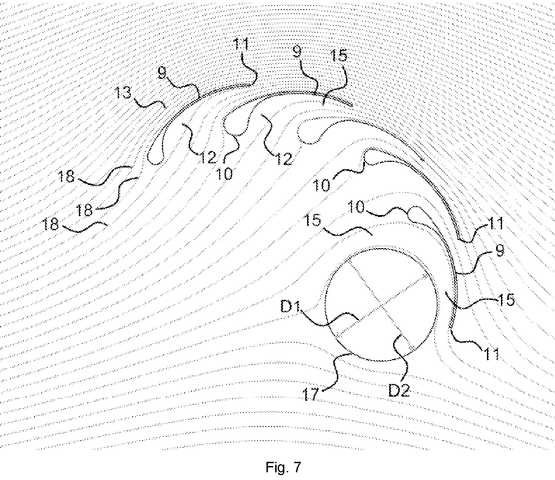

Fig. 6 is another cross-sectional view of a trawl door comprising several hydrofoils 9, each with a leading edge 10 and a trailing edge 11, and a round-shaped elongated element 17 positioned on the pressure side 12 of the several hydrofoils 9. A notable feature is the mix of curved-sheet "single-sided" hydrofoils 9 and regular "double-sided" hydrofoils 9. Both the single-sided and the double-sided hydrofoils 9 contain the usual hydrofoil characteristics: A leading edge 10 and a trailing edge 11. The round-shaped elongated element 17 is not a hydrofoil, and thus characterized by the lack of hydrofoil characteristics such as leading edge, trailing edge, slenderness, and camber. The depicted round-shaped elongated element 17 is in the embodiment of figure 6 not perfectly circular but rather elliptic. The elliptical shape may be described by the ratio between the minor axis D1 and the major axis D2 of the round-shaped elongated element 17. Alternatively, it may be described by the eccentricity as disclosed herein. Even though the embodiments as shown in the figures show a round-shaped elongated element 17 with a perfect round shape, it is envisioned that the round-shaped elongated element 17 may have small curvature, bumps, or creases, which will yield a non-perfect round shape. Fig. 7 is a cross-sectional view of a trawl door comprising hydrofoils 9, leading edges 10, trailing edges 11, and a round-shaped elongated element 17. One notable feature of the embodiment, as shown in figure 7, is the exemplified hydrofoil shape being a hybrid between the before mentioned "single-sided" and "double-sided" types. Another notable feature is the flow visualization streamlines 18, which exactly shows the paths of the water in passing the trawl door when towed. The undisturbed direction of the water relative to towed trawl door is horizontally from left towards right. From a fluid dynamics viewpoint, it should be appreciated how the flow channel 15 between the round-shaped elongated element 17 and the nearest hydrofoil(s) 9 guides the flow around said round-shaped elongated element 17, thereby creating fluid dynamic circulation and lift.

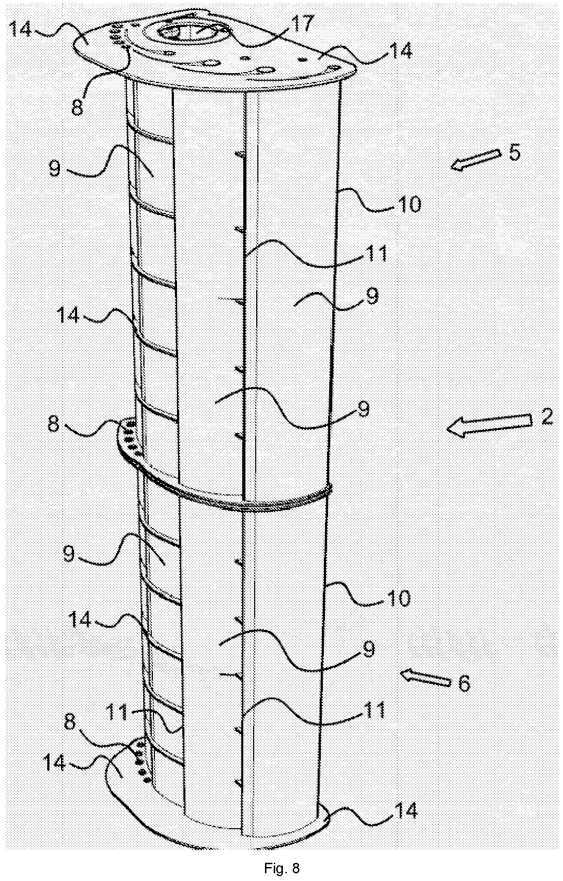

Fig. 8 is a perspective view of the trawl door 2 first half 5 and the trawl door 2 second half 6, both comprising hydrofoils 9, leading edges 10, trailing edges 11, section endplates and stiffeners 14, rear bridle attachment holes 8, and a round-shaped elongated element 17, seen from the suction (convex) side of the hydrofoils 9 (trawl door 2). The bridles (not shown) towing the trawl may be attached to one of the upper and one of the lower rear bridle attachment holes 8, or one bridle will be attached to one of mid rear bridle attachment holes 8. Different types of bridle rigging are possible depending on the type of fishing trawl net to be used and what kind of fish to catch.

Fig. 8 further shows how the round-shaped elongated element 17 has an interior cavity with openings towards the surrounding environment. The embodiment shows one opening in the first half 5 or the trawl door 2. The opening can be seen extending through the section endplates 14.

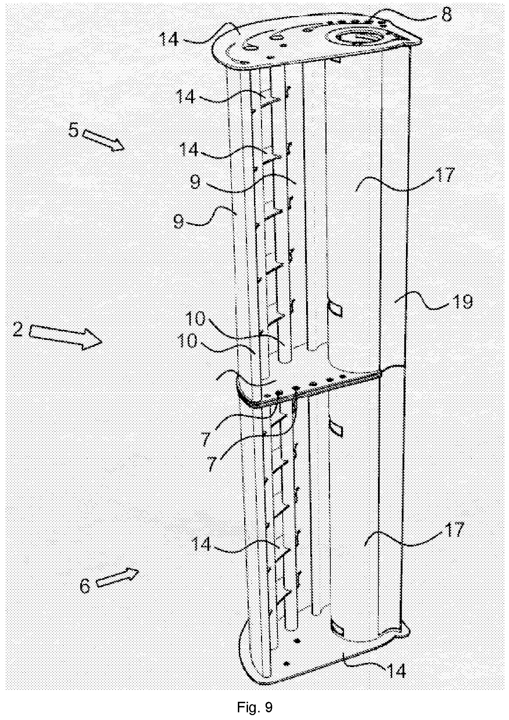

Fig. 9 is a perspective view of an embodiment of the first half 5 and second half 6 of the trawl door 2 similar to the one disclosed in fig. 8. Here the trawl door 2 comprises hydrofoils 9 with leading edges 10 and trailing edges (not shown), section endplates and stiffeners 14, rear bridle attachment holes 8, and a round-shaped elongated element 17 with and inner cavity extending through the section endplate 14 to be in fluid connection with the surrounding environment. The trawl door 2 is seen from the pressure (concave) side. The main wire (not shown) connecting the trawl door to the towing vessel may be attached to one of the front wire attachment holes 7. Alternative front wire attachment hole 7 designs may be used, such as the possibility of having front wire attachment holes 7 in different vertical heights slightly offset from the shown span wise mid-position. The embodiment of figure 9 further shows a fixed add-on flap 19 attached to the round-shaped elongated element 17.

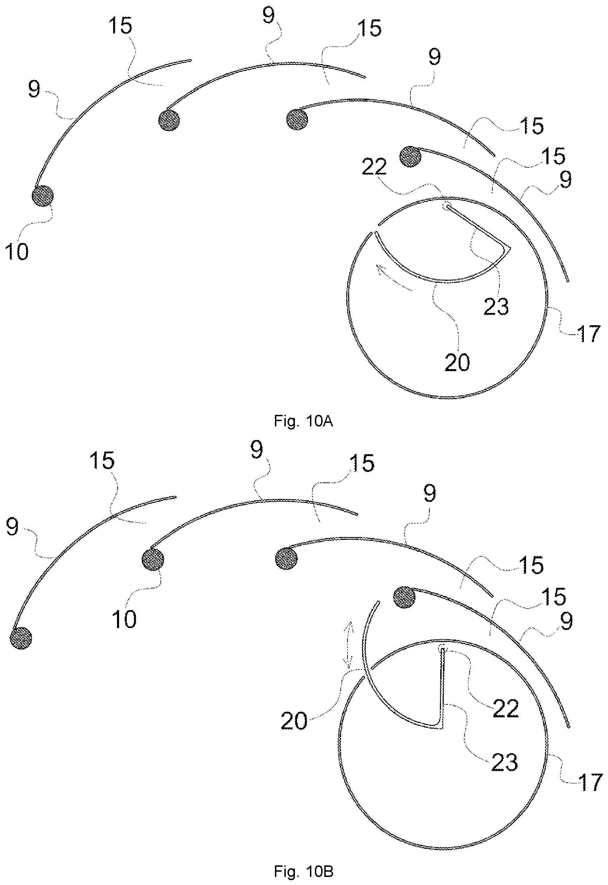

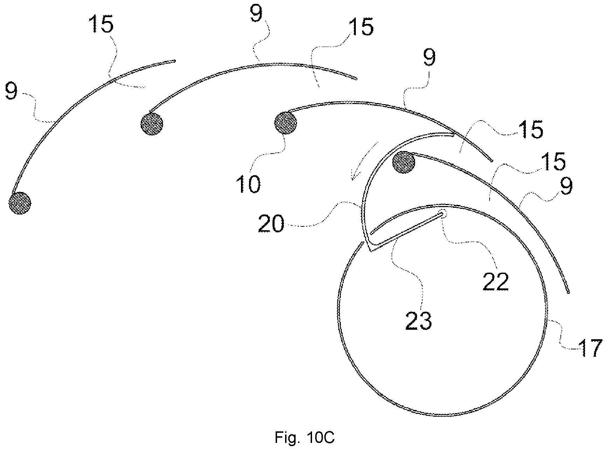

Figure 10 is a cross-sectional view of an embodiment of a trawl door with energy-efficient shutters where the pivoting axis 22 is inside a round-shaped elongated element 17 and the shutters 20 are shown in a) disengaged position, b) mid-position, and c) engaged position, and where the shutters 20 are pivoted around the pivoting axis 22 such that they are positioned inside the round-shaped elongated element 17 when in disengaged position a). The trawl door comprises several hydrofoils 9, each with a leading edge and a trailing edge, and a round-shaped elongated element 17 positioned on the pressure side of the several hydrofoils 9. A notable feature is the mix of a round shaped leading edge of the hydrofoils 9 and a curved-sheet "single-sided" trailing edge of the hydrofoils 9. The mixed hydrofoils 9 still contain the usual hydrofoil characteristics: A leading edge, a trailing edge, slenderness, and camber. The depicted round-shaped elongated element 17 comprises the pivoting axis 22 located inside the round-shaped elongated element 17 on which the shutters 20 pivot around when moving from the engaged position c) to the mid-position b) and further to the disengaged position a) (c) → b) → a)), or vice versa (a) → b) → c)). The shutters 20 are shown connected to the pivoting axis 22 by a fixations device 23. The embodiment shows how the shutters 20 closes two of the flow channels, the flow channel between the last hydrofoil 9 and its neighbouring hydrofoil 9 and the flow channel between the last hydrofoil 9 and the round-shaped elongated element 17. The flow channels are here closed, substantially blocking all fluid flow through the two flow channels. The embodiment also shows how the shutters 20 are pivoted into the round-shaped elongated element 17 when being in the disengaged position through a longitudinal opening in the round-shaped elongated element 17.

Although the longitudinal opening in the round-shaped elongated element 17 makes the element slightly weaker structurally, this is not seen as a significant weakening as the construction is plenty strong and the opening is in a zone with only small structural tensions.

Further, by pivoting the shutters 20 around the pivoting axis 22 an into the inner of the round-shaped elongated element 17, the inactive shutters 20 does not interfere with the flow at all. Further, relative short shutters 20 limits the force needed for actuation/movement around the pivoting axis 22 when going from disengaged to engaged position or vice versa. Even further, the disengaged shutters 20 are well protected inside when located inside the round-shaped elongated element 17 when the trawl door is inactive, e.g. during transport or other handling or when the trawl door hang inertly on the rear of the fishing vessel 1.

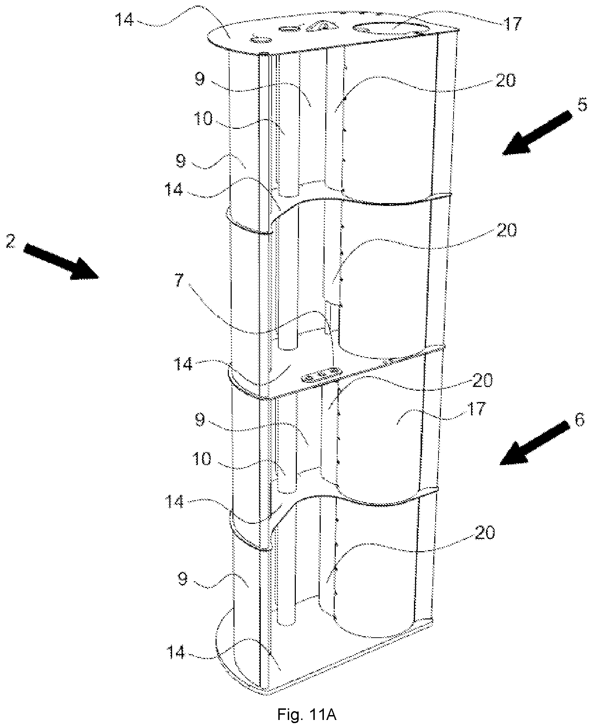

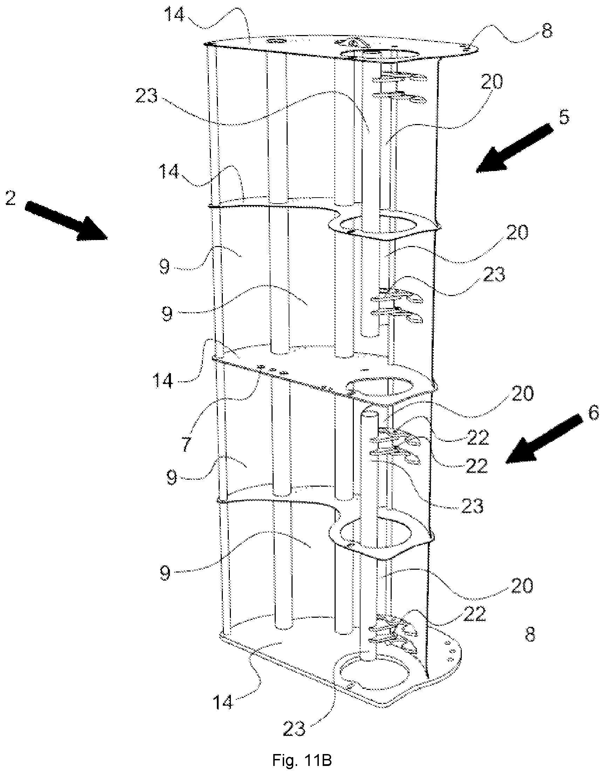

Figure 11 is a perspective view of embodiment of the trawl door from figure 10, as seen from two sides a) and b), and where the round-shaped elongated element 17 is made invisible in b) for the sole purpose of better illustrating the energy-efficient shutters 20 and the pivoting axes 22. The trawl door 2 first half 5 and the trawl door 2 second half 6, both comprising hydrofoils 9, leading edges 10, trailing edges, section endplates and stiffeners 14, rear bridle attachment holes 8, and a round-shaped elongated element 17. The trawl door 2 is seen from the pressure (concave) side. The bridles (not shown) towing the trawl may be attached to one of the upper and one of the lower rear bridle attachment holes 8, or one bridle will be attached to one of mid rear bridle attachment holes 8. Different types of bridle rigging are possible depending on the type of fishing trawl net to be used and what kind of fish to catch. The main wire (not shown) connecting the trawl door to the towing vessel may be attached to one of the front wire attachment holes 7. Alternative front wire attachment hole 7 designs may be used, such as the possibility of having front wire attachment holes 7 in different vertical heights slightly offset from the shown span wise mid-pos ition.

The embodiment further shows how the round-shaped elongated element 17 has an interior cavity with openings towards the surrounding environment. The embodiment shows one opening in the first half 5 or the trawl door 2. The opening can be seen extending through the section endplates 14. Further are the elliptically shaped openings extending perpendicular to the longitudinal direction of the round-shaped elongated element 17. These holes extends from the interior cavity of the round-shaped elongated element 17 through the round-shaped elongated element 17, hereby making the interior cavity being in fluid connection with the surrounding environment.

The embodiment further shows how interior cavity with openings towards the surrounding environment are able to comprise the shutters 20 and that the shutters 20 are able to be rotated such that they are substantially located inside the round-shaped elongated element 17 when in a disengaged position.

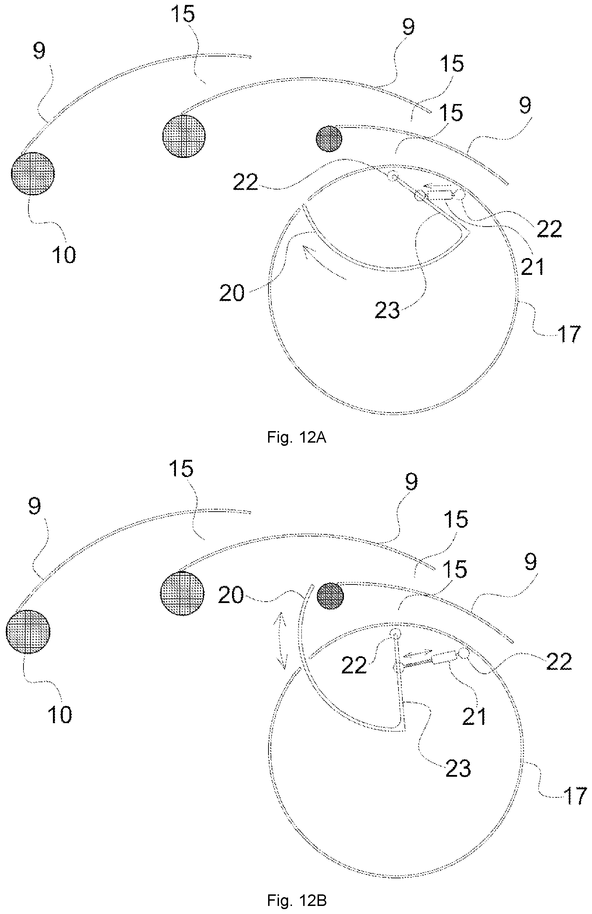

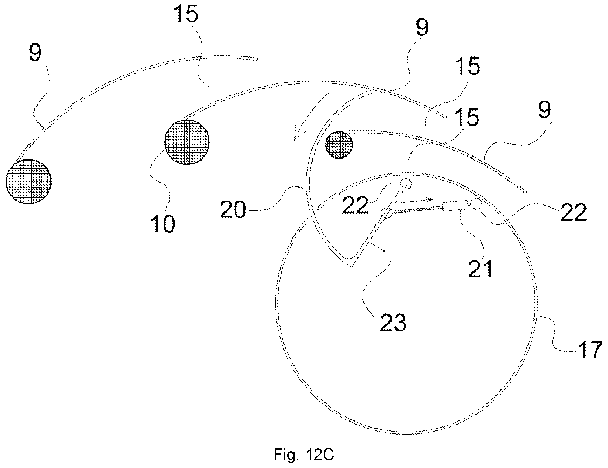

Figure 12 is a cross-sectional view of an embodiment of a trawl door with energy-efficient shutters where the pivoting axis 22 and the drive means 21, are inside a round-shaped elongated element 17, and the shutters 20 are shown in a) disengaged position, b) mid-position, and c) engaged position, and where the shutters 20 are pivoted around the pivoting axis 22 such that they are positioned inside the round-shaped elongated element 17 when in disengaged position. The drive means 21 here comprise of a spindle arrangement used for actuation, which will then pivot the shutters 20 around the pivoting axis 22. The shutter 20 and drive means 21 are shown connected to the pivoting axis 22 by fixations devices 23.

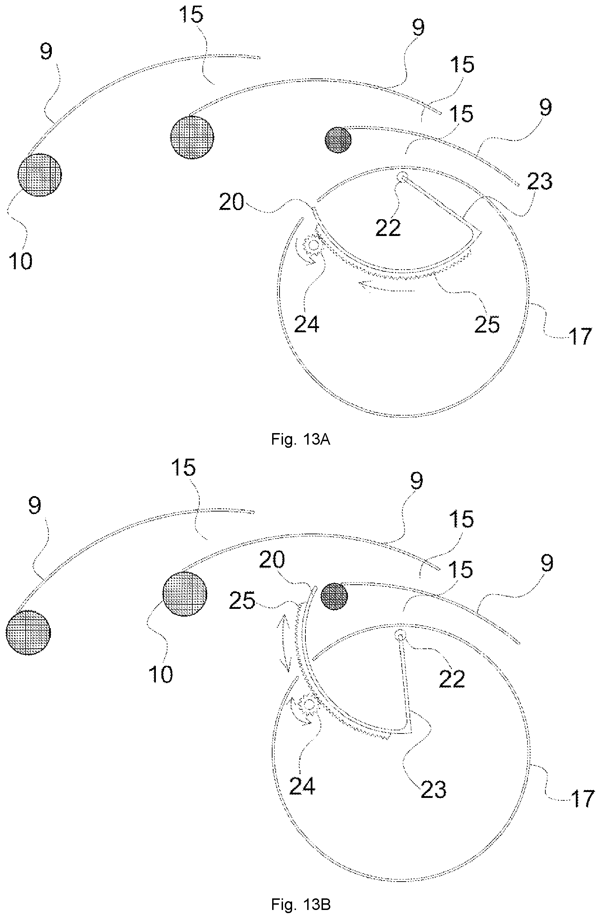

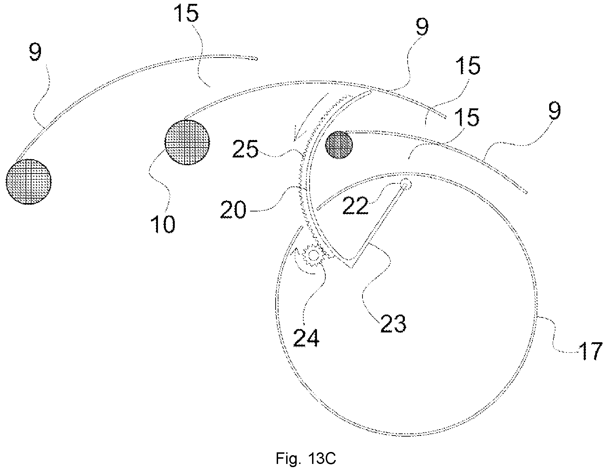

Figure 13 is a cross-sectional view of another embodiment of a trawl door with energy-efficient shutters 20 where the pivoting axis 22 and the drive means, in this embodiment a gear device 24, 25, are inside a round-shaped elongated element 17, and the shutters 20 are shown in a) disengaged position, b) mid-position, and c) engaged position, and where the shutters 20 are pivoted around the pivoting axis 22 such that they are positioned inside the round-shaped elongated element 17 when in disengaged position. The gear device comprises a rotation gear 24 located inside the round-shaped elongated element 17 and a shutter gear 25 located on the shutters 20. When the rotation gear 24 is rotated (e.g. via a motor) it will move the shutter 20 from a disengaged position to an engaged position or vice versa via the shutter gear 25. As depicted in the cross-sectional view of the embodiment, if the rotation gear 24 is rotated clockwise the shutters 20 will pivot around the pivoting axis 22 towards the disengaged position, while if the rotation gear 24 is rotated counter clockwise the shutters 20 will pivot around the pivoting axis 22 towards the engaged position. This configuration can be switched around by adding an additional rotation gear between the rotation gear 24 and the shutter gear 25, or in other ways, which are within the skilled person's knowledge.

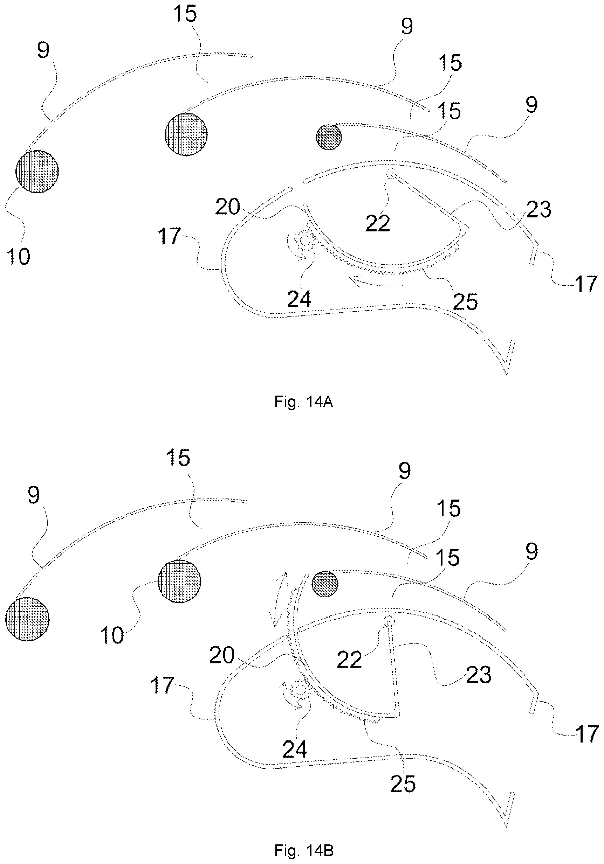

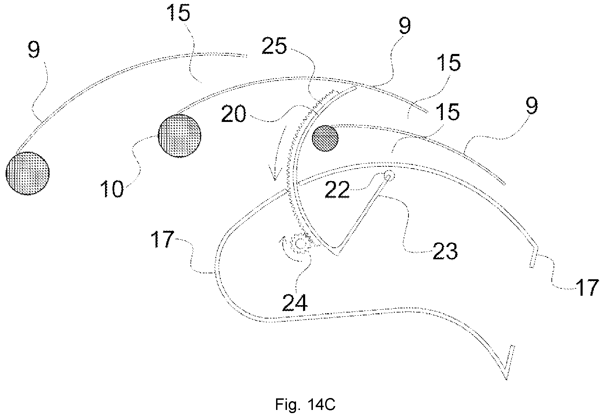

Figure 14 is a cross-sectional view of another embodiment of a trawl door with energy-efficient shutters 20 where the pivoting axis 22 and drive means are inside a semi-round-shaped elongated element 17, and the shutters 20 are shown in a) disengaged position, b) mid-position, and c) engaged position, and where the shutters 20 are pivoted around the pivoting axis 22 such that they are positioned inside the round-shaped elongated element when in disengaged position. The embodiment of figure 14 is very similar to the embodiments of figure 10-13, however in this embodiment round-shaped elongated element 17 is a semi-round-shaped elongated element 17 with an opening in the trailing edge of the semi-round-shaped elongated element 17. The drive means in this embodiment are similar to the gear device 24, 25 of the embodiment of figure 13.

### References

1. Fishing vessel
2. Trawl door
3. Wire
4. Bridle
5. Trawl door first half
6. Trawl door second half
7. Front wire attachment holes
8. Rear bridle attachment holes
9. Hydrofoil
10. Hydrofoil leading edge
11. Hydrofoil trailing edge
12. Hydrofoil pressure side
13. Hydrofoil suction side
14. Section endplates and stiffeners
15. Flow channel
16. Fishing trawl net
17. Round-shaped elongated element / Semi-round-shaped elongated element
18. Flow streamline visualization
19. Fixed add-on flap
20. Shutter
21. Drive means
22. Pivoting axis
23. Fixation device
24. Rotation gear
25. Shutter gear
C. Chord length of trawl door
D1. Minor axis of round-shaped elongated element
D2. Major axis of round-shaped elongated element

## Claims

1. A trawl door (2) comprising
a plurality of hydrofoils (9) extending in parallel in a longitudinal direction of the hydrofoils (9) and being arranged in an overlapping sequence so that one or more flow channels (15) are formed between neighbouring hydrofoils (9),
one or more shutters (20) extending in the longitudinal direction of the plurality of hydrofoils (9) and arranged at a pressure side (12) of the plurality of hydrofoils (9), and drive means (21) for rotating the one or more shutters (20) about a pivoting axis (22) extending in the longitudinal direction of the plurality of hydrofoils (9),
wherein the drive means (21) are arranged to rotate at least one of the shutters (20) between a disengaged position and an engaged position, in which engaged position the at least one shutter (20) substantially reduces or prevents a fluid flow through one or more of the flow channels (15) during operation of the trawl door (2),
said trawl door being **characterized in that** the shutters (20) are orientated such that they, upon pivoting during operation of the trawl door (2), move substantially parallel to their own main surfaces such that water pressure forces are directed substantially perpendicular to the moving direction of the shutters (20).

2. The trawl door (2) according to any preceding claim, wherein the shutters are orientated such that the water pressure forces are directed substantially through the shutter pivoting axis during trawl operations.

3. The trawl door (2) according to any preceding claim, wherein the at least one shutter (20) substantially reduces or prevents a fluid flow through one or more of the flow channels (15) during operation of the trawl door by 50%, such as by 75%, such as by 90%, such as by 99%, such as the at least one shutter (20) substantially blocks a fluid flow through one or more of the flow channels (15) during operation of the trawl door.

4. The trawl door (2) according to any preceding claim, wherein the trawl door (2) further comprising one or more fixation devices (23), wherein the one or more fixation devices (23) are arranged to structurally connect the at least one shutter (20) to the pivoting axis (22).

5. The trawl door (2) according to any preceding claim, wherein the drive means (21) are one or more actuators arranged to rotate at least one of the shutters (20) between the disengaged position and the engaged position.

6. The trawl door (2) according to any preceding claim, wherein the trawl door (2) is made of a first half (5) and a second half (6), wherein the first half (5) comprises a first set of one or more shutters (20) and the second half (6) comprises a second set of one or more shutters (20), and wherein a first drive means (21) is placed to control the position of the first set of one or more shutters (20) and a second drive means (21) is placed to control the position of the second set of one or more shutters (20).

7. The trawl door (2) according to any preceding claim, wherein the trawl door (2) further comprising at least one round-shaped elongated element (17);
wherein the trawl door has a chord length (C) defined as the chord length measured from a leading edge (10) of a first hydrofoil (9) of the overlapping sequence of the plurality of hydrofoils (9) to a trailing edge (11) of a last hydrofoil (9) of the overlapping sequence of the plurality of hydrofoils (9);
wherein the at least one round-shaped elongated element (17) extends in a longitudinal direction parallel to the longitudinal direction of the hydrofoils (9);
wherein the at least one round-shaped elongated element (17) is positioned at a pressure side (12) of the plurality of hydrofoils (9) and at a rear part of the overlapping sequence of the plurality of hydrofoils (9) in such a way that the at least one round-shaped elongated element (17) forms a structurally connected integrated part to the plurality of hydrofoils (9) such that at least one flow channel (15) is formed between the at least one round-shaped elongated element (17) and the last hydrofoil (9) of the overlapping sequence of the plurality of hydrofoils (9); and
wherein the at least one round-shaped elongated element (17) has an elliptically shaped cross-section, having a minor axis (D1) and a major axis (D2), and wherein the major axis (D2) is between 5% and 75% of the chord length (C) and the ratio between the minor axis (D1) and the major axis (D2) is between 0.5 and 1.0.

8. The trawl door (2) according to claim 7, wherein the pivoting axis (22) is located inside the at least one round-shaped elongated element (17).

9. Use of a set of trawl doors (2) comprising one starboard trawl door (2) and one port trawl door (2), for trawling operations, wherein each of the trawl doors (2) comprises a plurality of hydrofoils (9) extending in parallel in a longitudinal direction of the hydrofoils (9) and being arranged in an overlapping sequence so that one or more flow channels (15) are formed between neighbouring hydrofoils (9), one or more shutters (20) extending in the longitudinal direction of the plurality of hydrofoils (9) and arranged at a pressure side (12) of the plurality of hydrofoils (9), drive means (21) for rotating the one or more shutters (20) about a pivoting axis (22) extending in the longitudinal direction of the plurality of hydrofoils (9), wherein the drive means (21) are arranged to rotate at least one of the shutters (20) between a disengaged position and an engaged position, in which engaged position the at least one shutter (20) substantially reduces or prevents a fluid flow through one or more of the flow channels (15) during operation of the trawl door (2), and wherein the shutters (20) are orientated such that they, upon pivoting during operation of the trawl door (2), move substantially parallel to their own main surfaces such that water pressure forces are directed substantially perpendicular to the moving direction of the shutters (20).

10. Use of a set of trawl doors (2) comprising one starboard trawl door (2) and one port trawl door (2), for towing a fishing trawl net (16), wherein a fishing vessel (1) is towing the set of trawl doors (2), and wherein each of the trawl doors (2) comprises a plurality of hydrofoils (9) extending in parallel in a longitudinal direction of the hydrofoils (9) and being arranged in an overlapping sequence so that one or more flow channels (15) are formed between neighbouring hydrofoils (9), one or more shutters (20) extending in the longitudinal direction of the plurality of hydrofoils (9) and arranged at a pressure side (12) of the plurality of hydrofoils (9), drive means (21) for rotating the one or more shutters (20) about a pivoting axis (22) extending in the longitudinal direction of the plurality of hydrofoils (9), wherein the drive means (21) are arranged to rotate at least one of the shutters (20) between a disengaged position and an engaged position, in which engaged position the at least one shutter (20) substantially reduces or prevents a fluid flow through one or more of the flow channels (15) during operation of the trawl door (2), and wherein the shutters (20) are orientated such that they, upon pivoting during operation of the trawl door (2), move substantially parallel to their own main surfaces such that water pressure forces are directed substantially perpendicular to the moving direction of the shutters (20).

11. Use of a set of trawl doors (2) comprising one starboard trawl door (2) and one port trawl door (2), for towing seismic equipment for seabed measurements for measuring the seabed composition, and wherein each of the trawl doors (2) comprises a plurality of hydrofoils (9) extending in parallel in a longitudinal direction of the hydrofoils (9) and being arranged in an overlapping sequence so that one or more flow channels (15) are formed between neighbouring hydrofoils (9), one or more shutters (20) extending in the longitudinal direction of the plurality of hydrofoils (9) and arranged at a pressure side (12) of the plurality of hydrofoils (9), drive means (21) for rotating the one or more shutters (20) about a pivoting axis (22) extending in the longitudinal direction of the plurality of hydrofoils (9), wherein the drive means (21) are arranged to rotate at least one of the shutters (20) between a disengaged position and an engaged position, in which engaged position the at least one shutter (20) substantially reduces or prevents a fluid flow through one or more of the flow channels (15) during operation of the trawl door (2), and wherein the shutters (20) are orientated such that they, upon pivoting during operation of the trawl door (2), move substantially parallel to their own main surfaces such that water pressure forces are directed substantially perpendicular to the moving direction of the shutters (20).

## Patentansprüche

1. Scherbrett (2), umfassend
eine Vielzahl von Tragflügeln (9), die sich parallel in einer Längsrichtung der Tragflügel (9) erstreckt und in einer überlappenden Reihe angeordnet ist, sodass ein oder mehrere Strömungskanäle (15) zwischen benachbarten Tragflügeln (9) gebildet werden,
eine oder mehrere Klappen (20), die sich in der Längsrichtung der Vielzahl von Tragflügeln (9) erstrecken und an einer Druckseite (12) der Vielzahl von Tragflügeln (9) angeordnet sind, und
Antriebsmittel (21) zum Drehen der einen oder der mehreren Klappen (20) um eine Schwenkachse (22), die sich in der Längsrichtung der Vielzahl von Tragflügeln (9) erstreckt,
wobei die Antriebsmittel (21) dazu angeordnet sind, mindestens eine der Klappen (20) zwischen einer ausgerückten Position und einer eingerückten Position zu drehen, wobei in der eingerückten Position die mindestens eine Klappe (20) eine Fluidströmung durch einen oder mehrere der Strömungskanäle (15) während eines Betriebs des Scherbretts (2) im Wesentlichen reduziert oder verhindert,
wobei das Scherbrett **dadurch gekennzeichnet ist, dass** die Klappen (20) derart ausgerichtet sind, dass sie sich bei Schwenken während eines Betriebs des Scherbretts (2) im Wesentlichen parallel zu ihren eigenen Hauptflächen derart bewegen, dass Wasserdruckkräfte im Wesentlichen senkrecht zu der Bewegungsrichtung der Klappen (20) geleitet werden.

2. Scherbrett (2) nach einem der vorhergehenden Ansprüche, wobei die Klappen derart ausgerichtet sind, dass die Wasserdruckkräfte während Schleppvorgängen im Wesentlichen durch die Klappenschwenkachse geleitet werden.

3. Scherbrett (2) nach einem der vorhergehenden Ansprüche, wobei die mindestens eine Klappe (20) eine Fluidströmung durch einen oder mehrere der Strömungskanäle (15) während eines Betriebs des Scherbretts um 50 %, wie etwa um 75 %, wie etwa um 90 %, wie etwa um 99 %, wie etwa derart, dass die mindestens eine Klappe (20) eine Fluidströmung durch einen oder mehrere der Strömungskanäle (15) während eines Betriebs des Scherbretts im Wesentlichen blockiert, im Wesentlichen reduziert oder verhindert.

4. Scherbrett (2) nach einem der vorhergehenden Ansprüche, wobei das Scherbrett (2) ferner eine oder mehrere Befestigungsvorrichtungen (23) umfasst, wobei die eine oder die mehreren Befestigungsvorrichtungen (23) dazu angeordnet sind, die mindestens eine Klappe (20) strukturell mit der Schwenkachse (22) zu verbinden.

5. Scherbrett (2) nach einem der vorhergehenden Ansprüche, wobei die Antriebsmittel (21) ein oder mehrere Aktoren sind, die dazu angeordnet sind, mindestens eine der Klappen (20) zwischen der ausgerückten Position und der eingerückten Position zu drehen.

6. Scherbrett (2) nach einem der vorhergehenden Ansprüche, wobei das Scherbrett (2) aus einer ersten Hälfte (5) und einer zweiten Hälfte (6) hergestellt ist, wobei die erste Hälfte (5) einen ersten Satz einer oder mehrerer Klappen (20) umfasst und die zweite Hälfte (6) einen zweiten Satz einer oder mehrerer Klappen (20) umfasst und wobei ein erstes Antriebsmittel (21) dazu platziert ist, die Position des ersten Satzes einer oder mehrerer Klappen (20) zu steuern, und ein zweites Antriebsmittel (21) dazu platziert ist, die Position des zweiten Satzes einer oder mehrerer Klappen (20) zu steuern.

7. Scherbrett (2) nach einem der vorhergehenden Ansprüche, wobei das Scherbrett (2) ferner mindestens ein kugelförmiges längliches Element (17) umfasst;
wobei das Scherbrett eine Sehnenlänge (C) aufweist, die als die Sehnenlänge, gemessen ab einer Vorderkante (10) eines ersten Tragflügels (9) der überlappenden Reihe der Vielzahl von Tragflügeln (9) zu einer Hinterkante (11) eines letzten Tragflügels (9) der überlappenden Reihe der Vielzahl von Tragflügeln (9), definiert wird;
wobei sich das mindestens eine kugelförmige längliche Element (17) in einer Längsrichtung parallel zu der Längsrichtung der Tragflügel (9) erstreckt;
wobei das mindestens eine kugelförmige längliche Element (17) an einer Druckseite (12) der Vielzahl von Tragflügeln (9) und an einem hinteren Teil der überlappenden Reihe der Vielzahl von Tragflügeln (9) dergestalt positioniert ist, dass das mindestens eine kugelförmige längliche Element (17) einen strukturell verbundenen, in die Vielzahl von Tragflügeln (9) integrierten Teil derart bildet, dass mindestens ein Strömungskanal (15) zwischen dem mindestens einen kugelförmigen länglichen Element (17) und dem letzten Tragflügel (9) der überlappenden Reihe der Vielzahl von Tragflügeln (9) gebildet wird; und
wobei das mindestens eine kugelförmige längliche Element (17) einen ellipsenförmigen Querschnitt aufweist, der eine Nebenachse (D1) und eine Hauptachse (D2) aufweist, und wobei die Hauptachse (D2) zwischen 5 % und 75 % der Sehnenlänge (C) beträgt und das Verhältnis zwischen der Nebenachse (D1) und der Hauptachse (D2) zwischen 0,5 und 1,0 beträgt.

8. Scherbrett (2) nach Anspruch 7, wobei sich die Schwenkachse (22) innerhalb des mindestens einen kugelförmigen länglichen Elements (17) befindet.

9. Verwendung eines Satzes von Scherbrettern (2), umfassend ein Steuerbordscherbrett (2) und ein Backbordscherbrett (2) für Schleppvorgänge, wobei jedes der Scherbretter (2) Folgendes umfasst: eine Vielzahl von Tragflügeln (9), die sich parallel in einer Längsrichtung der Tragflügel (9) erstreckt und in einer überlappenden Reihe angeordnet ist, sodass ein oder mehrere Strömungskanäle (15) zwischen benachbarten Tragflügeln (9) gebildet werden, eine oder mehrere Klappen (20), die sich in der Längsrichtung der Vielzahl von Tragflügeln (9) erstrecken und an einer Druckseite (12) der Vielzahl von Tragflügeln (9) angeordnet sind, Antriebsmittel (21) zum Drehen der einen oder der mehreren Klappen (20) um eine Schwenkachse (22), die sich in der Längsrichtung der Vielzahl von Tragflügeln (9) erstreckt, wobei die Antriebsmittel (21) dazu angeordnet sind, mindestens eine der Klappen (20) zwischen einer ausgerückten Position und einer eingerückten Position zu drehen, wobei in der eingerückten Position die mindestens eine Klappe (20) eine Fluidströmung durch einen oder mehrere der Strömungskanäle (15) während eines Betriebs des Scherbretts (2) im Wesentlichen reduziert oder verhindert und wobei die Klappen (20) derart ausgerichtet sind, dass sie sich bei Schwenken während eines Betriebs des Scherbretts (2) im Wesentlichen parallel zu ihren eigenen Hauptflächen derart bewegen, dass Wasserdruckkräfte im Wesentlichen senkrecht zu der Bewegungsrichtung der Klappen (20) geleitet werden.

10. Verwendung eines Satzes von Scherbrettern (2), umfassend ein Steuerbordscherbrett (2) und ein Backbordscherbrett (2) zum Schleppen eines Fischereischleppnetzes (16), wobei ein Fischerboot (1) den Satz von Scherbrettern (2) schleppt und wobei jedes der Scherbretter (2) Folgendes umfasst: eine Vielzahl von Tragflügeln (9), die sich parallel in einer Längsrichtung der Tragflügel (9) erstreckt und in einer überlappenden Reihe angeordnet ist, sodass ein oder mehrere Strömungskanäle (15) zwischen benachbarten Tragflügeln (9) gebildet werden, eine oder mehrere Klappen (20), die sich in der Längsrichtung der Vielzahl von Tragflügeln (9) erstrecken und an einer Druckseite (12) der Vielzahl von Tragflügeln (9) angeordnet sind, Antriebsmittel (21) zum Drehen der einen oder der mehreren Klappen (20) um eine Schwenkachse (22), die sich in der Längsrichtung der Vielzahl von Tragflügeln (9) erstreckt, wobei die Antriebsmittel (21) dazu angeordnet sind, mindestens eine der Klappen (20) zwischen einer ausgerückten Position und einer eingerückten Position zu drehen, wobei in der eingerückten Position die mindestens eine Klappe (20) eine Fluidströmung durch einen oder mehrere der Strömungskanäle (15) während eines Betriebs des Scherbretts (2) im Wesentlichen reduziert oder verhindert und wobei die Klappen (20) derart ausgerichtet sind, dass sie sich bei Schwenken während eines Betriebs des Scherbretts (2) im Wesentlichen parallel zu ihren eigenen Hauptflächen derart bewegen, dass Wasserdruckkräfte im Wesentlichen senkrecht zu der Bewegungsrichtung der Klappen (20) geleitet werden.

11. Verwendung eines Satzes von Scherbrettern (2), umfassend ein Steuerbordscherbrett (2) und ein Backbordscherbrett (2) zum Schleppen seismischer Geräte für Meeresbodenmessungen zum Messen der Meeresbodenzusammensetzung und wobei jedes der Scherbretter (2) Folgendes umfasst: eine Vielzahl von Tragflügeln (9), die sich parallel in einer Längsrichtung der Tragflügel (9) erstreckt und in einer überlappenden Reihe angeordnet ist, sodass ein oder mehrere Strömungskanäle (15) zwischen benachbarten Tragflügeln (9) gebildet werden, eine oder mehrere Klappen (20), die sich in der Längsrichtung der Vielzahl von Tragflügeln (9) erstrecken und an einer Druckseite (12) der Vielzahl von Tragflügeln (9) angeordnet sind, Antriebsmittel (21) zum Drehen der einen oder der mehreren Klappen (20) um eine Schwenkachse (22), die sich in der Längsrichtung der Vielzahl von Tragflügeln (9) erstreckt, wobei die Antriebsmittel (21) dazu angeordnet sind, mindestens eine der Klappen (20) zwischen einer ausgerückten Position und einer eingerückten Position zu drehen, wobei in der eingerückten Position die mindestens eine Klappe (20) eine Fluidströmung durch einen oder mehrere der Strömungskanäle (15) während eines Betriebs des Scherbretts (2) im Wesentlichen reduziert oder verhindert und wobei die Klappen (20) derart ausgerichtet sind, dass sie sich bei Schwenken während eines Betriebs des Scherbretts (2) im Wesentlichen parallel zu ihren eigenen Hauptflächen derart bewegen, dass Wasserdruckkräfte im Wesentlichen senkrecht zu der Bewegungsrichtung der Klappen (20) geleitet werden.

## Revendications

1. Porte de chalut (2) comprenant
une pluralité d'hydroptères (9) s'étendant en parallèle dans une direction longitudinale des hydroptères (9) et étant agencés dans une séquence de chevauchement de sorte qu'un ou plusieurs canaux d'écoulement (15) sont formés entre des hydroptères voisins (9),
un ou plusieurs volets (20) s'étendant dans la direction longitudinale de la pluralité de d'hydroptères (9) et agencés sur un intrados (12) de la pluralité d'hydroptères (9), et
des moyens d'entraînement (21) permettant de faire tourner les un ou plusieurs volets (20) autour d'un axe de pivotement (22) s'étendant dans la direction longitudinale de la pluralité d'hydroptères (9),
dans laquelle les moyens d'entraînement (21) sont agencés pour faire tourner au moins l'un des volets (20) entre une position libérée et une position en prise, dans laquelle position en prise l'au moins un volet (20) réduit ou empêche sensiblement un écoulement de fluide à travers un ou plusieurs des canaux d'écoulement (15) pendant le fonctionnement de la porte de chalut (2),
ladite porte de chalut étant **caractérisée en ce que** les volets (20) sont orientés de sorte que, lors du pivotement pendant le fonctionnement de la porte de chalut (2), ils se déplacent sensiblement parallèlement à leurs propres surfaces principales de sorte que les forces de pression d'eau sont dirigées sensiblement perpendiculairement à la direction de déplacement des volets (20).

2. Porte de chalut (2) selon une quelconque revendication précédente, dans laquelle les volets sont orientés de sorte que les forces de pression d'eau sont dirigées sensiblement à travers l'axe de pivotement de volet pendant des opérations de chalutage.

3. Porte de chalut (2) selon une quelconque revendication précédente, dans laquelle l'au moins un volet (20) réduit ou empêche sensiblement un écoulement de fluide à travers un ou plusieurs des canaux d'écoulement (15) pendant le fonctionnement de la porte de chalut de 50 %, tel que de 75 %, tel que de 90 %, tel que de 99 %, de telle manière que l'au moins un volet (20) bloque sensiblement un écoulement de fluide à travers un ou plusieurs des canaux d'écoulement (15) pendant le fonctionnement de la porte de chalut.

4. Porte de chalut (2) selon une quelconque revendication précédente, dans laquelle la porte de chalut (2) comprend en outre un ou plusieurs dispositifs de fixation (23), dans laquelle les un ou plusieurs dispositifs de fixation (23) sont agencés pour connecter structurellement l'au moins un volet (20) à l'axe de pivotement (22).

5. Porte de chalut (2) selon une quelconque revendication précédente, dans laquelle les moyens d'entraînement (21) sont un ou plusieurs actionneurs agencés pour faire tourner au moins l'un des volets (20) entre la position libérée et la position en prise.

6. Porte de chalut (2) selon une quelconque revendication précédente, dans laquelle la porte de chalut (2) est constituée d'une première moitié (5) et d'une seconde moitié (6), dans laquelle la première moitié (5) comprend un premier ensemble d'un ou de plusieurs volets (20) et la seconde moitié (6) comprend un second ensemble d'un ou de plusieurs volets (20), et dans laquelle un premier moyen d'entraînement (21) est placé pour commander la position du premier ensemble d'un ou de plusieurs volets (20) et un second moyen d'entraînement (21) est placé pour commander la position du second ensemble d'un ou de plusieurs volets (20).

7. Porte de chalut (2) selon une quelconque revendication précédente, dans laquelle la porte de chalut (2) comprend en outre au moins un élément allongé de forme ronde (17) ;
dans laquelle la porte de chalut a une longueur de corde (C) définie comme la longueur de corde mesurée à partir d'un bord d'attaque (10) d'un premier hydroptère (9) de la séquence de chevauchement de la pluralité d'hydroptères (9) jusqu'à un bord de fuite (11) d'un dernier hydroptère (9) de la séquence de chevauchement de la pluralité d'hydroptères (9) ;
dans laquelle l'au moins un élément allongé de forme ronde (17) s'étend dans une direction longitudinale parallèle à la direction longitudinale des hydroptères (9) ;
dans laquelle l'au moins un élément allongé de forme ronde (17) est positionné sur un intrados (12) de la pluralité d'hydroptères (9) et sur une partie arrière de la séquence de chevauchement de la pluralité d'hydroptères (9) de telle manière que l'au moins un élément allongé de forme ronde (17) forme une partie intégrée structurellement connectée à la pluralité d'hydroptères (9) de sorte qu'au moins un canal d'écoulement (15) est formé entre l'au moins un élément allongé de forme ronde (17) et le dernier hydroptère (9) de la séquence de chevauchement de la pluralité d'hydroptères (9) ; et
dans laquelle l'au moins un élément allongé de forme ronde (17) a une section transversale de forme elliptique, ayant un axe mineur (D1) et un axe majeur (D2), et dans laquelle l'axe majeur (D2) est compris entre 5 % et 75 % de la longueur de corde (C) et le rapport entre l'axe mineur (D1) et l'axe majeur (D2) est compris entre 0,5 et 1,0.

8. Porte de chalut (2) selon la revendication 7, dans laquelle l'axe de pivotement (22) est situé à l'intérieur de l'au moins un élément allongé de forme ronde (17).

9. Utilisation d'un ensemble de portes de chalut (2) comprenant une porte de chalut tribord (2) et une porte de chalut bâbord (2), pour des opérations de chalutage, dans laquelle chacune des portes de chalut (2) comprend une pluralité d'hydroptères (9) s'étendant en parallèle dans une direction longitudinale des hydroptères (9) et étant agencés dans une séquence de chevauchement de sorte qu'un ou plusieurs canaux d'écoulement (15) sont formés entre des hydroptères voisins (9), un ou plusieurs volets (20) s'étendant dans la direction longitudinale de la pluralité d'hydroptères (9) et agencés au niveau d'un intrados (12) de la pluralité d'hydroptères (9), des moyens d'entraînement (21) pour faire tourner les un ou plusieurs volets (20) autour d'un axe de pivotement (22) s'étendant dans la direction longitudinale de la pluralité d'hydroptères (9), dans laquelle les moyens d'entraînement (21) sont agencés pour faire tourner au moins l'un des volets (20) entre une position libérée et une position en prise, dans laquelle position en prise l'au moins un volet (20) réduit ou empêche sensiblement un écoulement de fluide à travers l'un ou plusieurs des canaux d'écoulement (15) pendant le fonctionnement de la porte de chalut (2), et dans laquelle les volets (20) sont orientés de sorte que, lors du pivotement pendant le fonctionnement de la porte de chalut (2), ils se déplacent sensiblement parallèlement à leurs propres surfaces principales de sorte que des forces de pression d'eau sont dirigées sensiblement perpendiculairement à la direction de déplacement des volets (20).

10. Utilisation d'un ensemble de portes de chalut (2) comprenant une porte de chalut tribord (2) et une porte de chalut bâbord (2), pour remorquer un chalut de pêche (16), dans laquelle un navire de pêche (1) remorque l'ensemble de portes de chalut (2), et dans laquelle chacune des portes de chalut (2) comprend une pluralité d'hydroptères (9) s'étendant en parallèle dans une direction longitudinale des hydroptères (9) et étant agencés dans une séquence de chevauchement de sorte qu'un ou plusieurs canaux d'écoulement (15) sont formés entre des hydroptères voisins (9), un ou plusieurs volets (20) s'étendant dans la direction longitudinale de la pluralité d'hydroptères (9) et agencés au niveau d'un intrados (12) de la pluralité d'hydroptères (9), des moyens d'entraînement (21) pour faire tourner les un ou plusieurs volets (20) autour d'un axe de pivotement (22) s'étendant dans la direction longitudinale de la pluralité d'hydroptères (9), dans laquelle les moyens d'entraînement (21) sont agencés pour faire tourner au moins l'un des volets (20) entre une position libérée et une position en prise, dans laquelle position en prise l'au moins un volet (20) réduit ou empêche sensiblement un écoulement de fluide à travers l'un ou plusieurs des canaux d'écoulement (15) pendant le fonctionnement de la porte de chalut (2), et dans laquelle les volets (20) sont orientés de sorte que, lors du pivotement pendant le fonctionnement de la porte de chalut (2), ils se déplacent sensiblement parallèlement à leurs propres surfaces principales de sorte que des forces de pression d'eau sont dirigées sensiblement perpendiculairement à la direction de déplacement des volets (20).

11. Utilisation d'un ensemble de portes de chalut (2) comprenant une porte de chalut tribord (2) et une porte de chalut bâbord (2), pour remorquer un équipement sismique pour des mesures du fond marin pour mesurer la composition du fond marin, et dans laquelle chacune des portes de chalut (2) comprend une pluralité d'hydroptères (9) s'étendant en parallèle dans une direction longitudinale des hydroptères (9) et étant agencés dans une séquence de chevauchement de sorte qu'un ou plusieurs canaux d'écoulement (15) sont formés entre des hydroptères voisins (9), un ou plusieurs volets (20) s'étendant dans la direction longitudinale de la pluralité d'hydroptères (9) et agencés au niveau d'un intrados (12) de la pluralité d'hydroptères (9), des moyens d'entraînement (21) pour faire tourner les un ou plusieurs volets (20) autour d'un axe de pivotement (22) s'étendant dans la direction longitudinale de la pluralité d'hydroptères (9), dans laquelle les moyens d'entraînement (21) sont agencés pour faire tourner au moins l'un des volets (20) entre une position libérée et une position en prise, dans laquelle position en prise l'au moins un volet (20) réduit ou empêche sensiblement un écoulement de fluide à travers l'un ou plusieurs des canaux d'écoulement (15) pendant le fonctionnement de la porte de chalut (2), et dans laquelle les volets (20) sont orientés de sorte que, lors du pivotement pendant le fonctionnement de la porte de chalut (2), ils se déplacent sensiblement parallèlement à leurs propres surfaces principales de sorte que des forces de pression d'eau sont dirigées sensiblement perpendiculairement à la direction de déplacement des volets (20).
